(19) Europäisches Patentamt / European Patent Office / Office européen des brevets

(11) **EP 3 125 062 B1**

(12) **EUROPEAN PATENT SPECIFICATION**

(45) Date of publication and mention
of the grant of the patent:
**01.07.2020 Bulletin 2020/27**

(51) Int Cl.:
**G05D 1/00** (2006.01)          **A47L 9/28** (2006.01)
**G06T 7/73** (2017.01)

(21) Application number: **16178899.7**

(22) Date of filing: **25.10.2013**

(54) **REMOTE CONTROL DEVICE FOR A ROBOT CLEANER**

FERNSTEUERUNG FÜR EINEN REINIGUNGSROBOTER

DISPOSITIF DE COMMANDE À DISTANCE POUR UN ROBOT NETTOYEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2012 KR 20120119843
05.09.2013 KR 20130106870**

(43) Date of publication of application:
**01.02.2017 Bulletin 2017/05**

(62) Document number(s) of the earlier application(s) in
accordance with Art. 76 EPC:
**13190270.2 / 2 725 443**

(73) Proprietor: **LG Electronics Inc.
Yeongdeungpo-gu
Seoul 150-721 (KR)**

(72) Inventors:
• **KIM, Sangyun
153-802 Seoul (KR)**
• **KIM, Younggie
153-802 Seoul (KR)**

(74) Representative: **Hibbert, Juliet Jane Grace et al
Kilburn & Strode LLP
Lacon London
84 Theobalds Road
London WC1X 8NL (GB)**

(56) References cited:
EP-A2- 2 381 328          EP-A2- 2 395 474
EP-A2- 2 466 411          KR-A- 20060 110 479
US-A1- 2007 081 695          US-A1- 2008 082 208
US-A1- 2009 172 605          US-A1- 2012 121 127

## Description

This application claims the benefit of earlier filing date and right of priority to Korean Application No. 10-2012-0119843 filed on October 26, 2012 and Korean Application No. 10-2013-0106870 filed on September 5, 2013.

## BACKGROUND OF THE DISCLOSURE

### Field of the Disclosure

The present invention relates to a robot cleaner and a control method of the same.

### Discussion of the Related Art

A robot cleaner is an electric home appliance for cleaning a floor or carpet of a room. The robot cleaner includes an air suction device provided in a cleaner case and the air suction device consists of a motor and a fan. After sucking external air containing foreign matters by driving the air suction device, the robot cleaner separates the foreign matters to collect dust and exhausts the clean air having foreign substances separated there from.

A vacuum cleaner may include a manual vacuum cleaner directly operated by a user and a robot cleaner that performs cleaning for itself, without user's operation.

The robot cleaner sucks foreign matters (e.g., dust) from the floor in a region set to clean, while driving the region itself. Also, the robot may perform cleaning, while automatically driving a cleaning region with using an obstacle sensor or while manually driving via a remote control device wirelessly linked to the robot cleaner.

However, an element for measuring a relative position between the user and the robot cleaner precisely is not provided in such the robot cleaner and there is a disadvantage of providing no various location based service based on the relative position between the user and the robot cleaner.

In addition, when the robot cleaner is manually operated, the user has to change a passage of the robot cleaner via a direction key provided in the remote control device in real time. Delay in the operation of the robot cleaner might occur and it might be inconvenient of the user to operate the direction key. Accordingly, the conventional robot cleaner has a disadvantage of failure in operating the robot cleaner precisely.

Wireless operation of such the robot cleaner has to be performed, while the user is watching the robot cleaner directly. When the user performs a cleaning area divided into a plurality of regions, the user and the robot cleaner have to be located in the same region to enable the wireless operation of the robot cleaner. In other words, unless the user located in a different region watches the robot cleaner, it is impossible to perform the wireless operation of the robot cleaner effectively.

When the user controls the conventional robot cleaner wirelessly, the robot cleaner provide the user with a pleasure disadvantageously. Accordingly, the user typically uses only an auto-clean mode and in reality the necessity for performing the remote control device is little.

US 2008/0082208 A1 discloses a method, apparatus, and medium for controlling a mobile device based on the image of a real space including the mobile device, more particularly, a method and apparatus for moving a mobile device based on the image of a real space photographed by a remote control of a user.

US 2012/0121127 A1 discloses an image processing apparatus that executes acquiring, on a first image having a pattern having first areas and second areas that have a different color from the first areas, a center position of the pattern where the first areas and the second areas cross, acquiring boundary positions between the first and second area, converting the first image to a second image having its image distortion corrected by using the center position and the boundary positions, acquiring, by scanning on the second image, expectation values which are areas including the point where the first and second areas cross excluding the center position, acquiring an intersection position of the intersection on the second image based on the expectation values, acquiring the center position and the positions on the first image corresponding to the intersection position by inverting the second image to the first image, determining the points corresponding to the acquired positions as features.

## SUMMARY OF THE DISCLOSURE

A remote control device configured to perform remote-control of a robot cleaner is provided as defined in claim 1.

Exemplary embodiments of the present disclosure provide a robot cleaner and overcome the disadvantages of a robot cleaner system including the robot cleaner.

Exemplary embodiments of the present disclosure also provide a robot cleaner that may enhance product reliability and satisfaction by providing a pleasure and an original function of cleaning to a user, and a control method of the same.

Exemplary embodiments of the present disclosure also provide a robot cleaner system that may measure a relative position between the user and itself precisely and a control method of the same.

Exemplary embodiments of the present disclosure also provide a robot cleaner system that may control a robot cleaner wirelessly, even without the user watching the robot cleaner directly, and a control method of the same.

Exemplary embodiments of the present disclosure also provide a robot cleaner system that may map a cleaning region recognized by a display of a remote control device with an actual cleaning region and a control method of the same.

Exemplary embodiments of the present disclosure also provide a robot cleaner system that may prevent damage to an external design thereof and allows the user to determine wireless operation easily and a control method of the robot cleaner.

Exemplary embodiments of the present disclosure also provide a robot cleaner system that may enhance use convenience by providing a location base service based on location information between the robot cleaner and the user and a control method of the same.

Exemplary embodiments of the present disclosure also provide a robot cleaner system that may be operated by the user intuitively and elaborately via a touch input for the robot cleaner displayed on the display of the remote control device and for an image of nearby regions and a control method of the same.

In an exemplary embodiment of the present disclosure, a robot cleaner system includes a robot cleaner configured to perform cleaning, while driving automatically; a recharging base for the robot cleaner; and a remote control device configured to perform remote-control of the robot cleaner, wherein the remote control device generates mapping information between an actual region and a virtual region based on image information generated by a camera on the robot cleaner and a region near the robot cleaner or image information generated by a camera on the recharging base and a region near the recharging base. A location based service may be performed or provided based on the mapping information. Specifically, the robot cleaner may be controlled wirelessly.

Here, the recharging base may be omitted. In other words, the robot cleaner system may not include the recharging base. Then, the generation of the image information on the recharging base need not be performed and only the location based service for the robot cleaner may be performed.

The remote control device may generate location information and posture information of the robot cleaner or location information and posture information of the recharging base by sensing the robot cleaner or the recharging base based on the image information.

The remote control device may generate the mapping information between the actual region and the virtual region by comparing an actual shape of the robot cleaner or an actual shape of the recharging base with a relative shape recognized from the image information.

Recognition means may be provided in the robot cleaner or the recharging base to generate the mapping information. Such recognition means may be recognized through the camera clearly. However, the recognition means may be a type of recognition means directly seen by the user, in other words, the means recognizable via a visible ray.

The remote control device may generate the mapping information by comparing actual shape information of the recognition means with relative shape information recognized by the image information.

The remote control device may include a display configured to display the image information; and an input unit configured to input a control signal of the robot cleaner thereto. The display may include a touch sensor functioned as the input unit configured to sense touch input. Accordingly, it is possible to form a free pattern on a virtual region of the display rather than simply touching a button icon and to control the robot cleaner wirelessly. The user may be provided with the simple cleaning and a pleasure.

The recognition means may include a recognition mark provided in an outer circumferential surface of a case provided in the robot cleaner or the recharging base. The recognition mark may be selectively detachable from the outer circumferential surface of the case.

A plurality of recognition means may be provided in the case of the robot cleaner. Distortion which might be generated in the recognition means and an error caused by the distortion can be minimized. Accordingly, more minute wireless control can be performed.

The recognition means may include a LED lighting configured to provide a light toward an outside of the case from an inside of the case provided in the robot cleaner or the recharging base. Such LED lighting may be selectively activated and it may normally be inactivated. The LED lighting may be activated only for the remote control.

An outer wall of the case may include a color layer and a reflective layer from the outside, and the LED lighting is provided under the reflective layer and the LED lighting visually exposed to the outer wall of the case, in an inactivated state, is excluded. Accordingly, a unique exterior design of the robot cleaner may not be damaged and also a minimal exterior design can be realized.

The LED lighting may be activated in accordance with a control signal of the remote control device, when an application for controlling the robot cleaner is implemented in the remote control device. The application may be a combined application for other icons as well as an icon for initializing the remote control.

In this instance, other icons may be input and the LED lighting may be activated when an icon for initializing the remote control is input.

In another aspect of the present disclosure, a control method of a robot cleaner system including a robot cleaner, a recharging base for the robot cleaner and a remote control having a camera and a display, the control method including a step of generating image information on the robot cleaner and a region near the robot cleaner, using the camera; a step of mapping an actual region to a virtual region displayed on the display based on the image information; and a step of performing a location based service of the robot cleaner through the virtual region displayed on the display.

The mapping step may include a step of sensing the robot cleaner or the recharging base based on the image information; and a step of generating location information on the robot cleaner or the recharging base.

The sensing step may perform at least one of image brightness controlling, noise rejection and color correction to improve an image of the image information.

The step of providing the location based service may convert an input of driving the robot cleaner via touch input on the virtual region displayed on the display into a driving command signal of the robot cleaner in the actual region based on the mapping information. In the step of providing the location based service, the driving command signal of the robot cleaner may be generated by a touch input on the virtual region displayed on the display.

The location based service may include at least one of a passage setting function, a cleaning region designating function, a do-not cleaning region designating function and a moving-to--the user setting function.

The control method of the robot cleaner system may further include a step of activating recognition means provided in the robot cleaner or the recharging base. Accordingly, an exterior design of the robot cleaner or the recharging base can be maintained as it is normally.

According to at least one embodiment, Exemplary embodiments of the present disclosure also provide a robot cleaner that may enhance product reliability and satisfaction by providing a pleasure and an original function of cleaning to a user, and a control method of the same.

Exemplary embodiments of the present disclosure also provide a robot cleaner system that may measure a relative position between the user and itself precisely and a control method of the same.

Exemplary embodiments of the present disclosure also provide a robot cleaner system that may control a robot cleaner wirelessly, even without the user watching the robot cleaner directly, and a control method of the same.

Exemplary embodiments of the present disclosure also provide a robot cleaner system that may map a cleaning region recognized by a display of a remote control device with an actual cleaning region and a control method of the same.

Exemplary embodiments of the present disclosure also provide a robot cleaner system that may prevent damage to an external design thereof and allows the user to determine wireless operation easily and a control method of the robot cleaner.

Exemplary embodiments of the present disclosure also provide a robot cleaner system that may enhance use convenience by providing a location base service based on location information between the robot cleaner and the user and a control method of the same.

Exemplary embodiments of the present disclosure also provide a robot cleaner system that may be operated by the user intuitively and elaborately via a touch input for the robot cleaner displayed on the display of the remote control device and for an image of nearby regions and a control method of the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

## BRIEF DESCRIPTION OF THE DRAWINGS

FIG. 1 is a perspective diagram illustrating a robot cleaner according to one embodiment of the disclosure;

FIG. 2 is a perspective diagram illustrating an inner structure of the robot cleaner according to one embodiment of the disclosure;

FIG. 3 is a lower perspective diagram of the robot cleaner according to one embodiment of the disclosure;

FIG. 4 is a block diagram of a robot cleaner composing a robot cleaner system according to one embodiment of the disclosure;

FIG. 5 is a block diagram of a remote control device composing the robot cleaner system according to one embodiment of the disclosure;

FIG. 6 is a front perspective diagram of the remote control device composing the robot cleaner system according to one embodiment of the disclosure, seen in front;

FIG. 7 is a rear perspective diagram of the remote control device composing the robot cleaner according to one embodiment of the disclosure;

FIG. 8 is a diagram illustrating a method for generating image information of a robot cleaner in the robot cleaner system according to one embodiment of the disclosure;

FIG. 9 is a diagram illustrating a method for generating location information of a robot cleaner in the robot cleaner system according to one embodiment of the disclosure;

FIG. 9a is a diagram illustrating an actual appearance of a recognition mark provided in the robot cleaner;

FIG. 9b is a diagram illustrating a relative appearance of a recognition mark recognized on an image of the image information;

FIG. 9c is a diagram illustrating location information generation of the robot cleaner, using the remote control device;

FIG. 9d is a diagram illustrating a posture of the robot cleaner;

FIGS. 10 through 13 are diagrams illustrating a location base service of the robot cleaner provided by the robot cleaner system according to one embodiment of the closure;

FIG. 10a is a diagram illustrating a method for setting a cleaning region of the robot cleaner via touch input on a display;

FIG. 10b is a diagram illustrating a state where the robot cleaner performs cleaning in a set cleaning region;

FIG. 11 is a diagram illustrating a method for setting a passage of the robot cleaner via touch input on the display;

FIG. 12 is a diagram illustrating a method for setting a do-not clean region of the robot cleaner via touch input on the display;

FIG. 13 is a diagram illustrating a method for calling the robot cleaner to the user's position;

FIG. 14 is a flow chart illustrating a basic configuration provided in a control method of a robot cleaner system according to one embodiment of the disclosure;

FIG. 15 is a flow chart illustrating a step of sensing the robot cleaner in the control method of the robot cleaner system according to one embodiment of the disclosure;

FIG. 16 is a flow chart illustrating a step of providing a location base service in the control method of the robot cleaner system according to one embodiment of the disclosure;

FIG. 17 is a flow chart illustrating a step of sensing the robot cleaner in a control method of a robot cleaner system according to another embodiment of the disclosure;

FIG. 18 is a perspective diagram illustrating an example of a recharging base provided in the robot cleaner system according to one embodiment of the disclosure;

FIG. 19 is a conceptual diagram illustrating a lightening image as an example of recognition means provided in the robot cleaner according to one embodiment of the disclosure;

FIG. 20 is a diagram illustrating comparison between before and after activating the lightening image shown in FIG. 19;

FIG. 21 is a diagram illustrating examples of the recognition means; and

FIG. 22 is an initial image of implementing an application in the remote control device.

## DESCRIPTION OF SPECIFIC EMBODIMENTS

Exemplary embodiments of the disclosed subject matter are described more fully hereinafter with reference to the accompanying drawings. The disclosed subject matter may, however, be embodied in many different forms and should not be construed as limited to the exemplary embodiments set forth herein.

Exemplary embodiments of the disclosed subject matter are described herein with reference to cross-region illustrations that are schematic illustrations of idealized embodiments (and intermediate structures) of the disclosed subject matter. As such, variations from the shapes of the illustrations as a result, for example, of manufacturing techniques and/or tolerances, are to be expected. Thus, exemplary embodiments of the disclosed subject matter should not be construed as limited to the particular shapes of regions illustrated herein but are to include deviations in shapes that result, for example, from manufacturing.

A robot system according to one embodiment of the present disclosure may include a robot cleaner 110 configured to perform cleaning, while driving automatically, and a remote control device 200 configured to remote-control the robot cleaner 100.

The remote control device 200 may include a camera 221' to generate image information for the robot cleaner 100 and a region near the robot cleaner 100. The remote control device 200 may generate location information about the robot cleaner 100 based on the image information. Specifically, a region displayed on the remote control device 200 may be mapped with an actual cleaning region based on such the image information. Referring to the accompanying drawings, the robot cleaner system according to one embodiment of the present disclosure is described as follows.

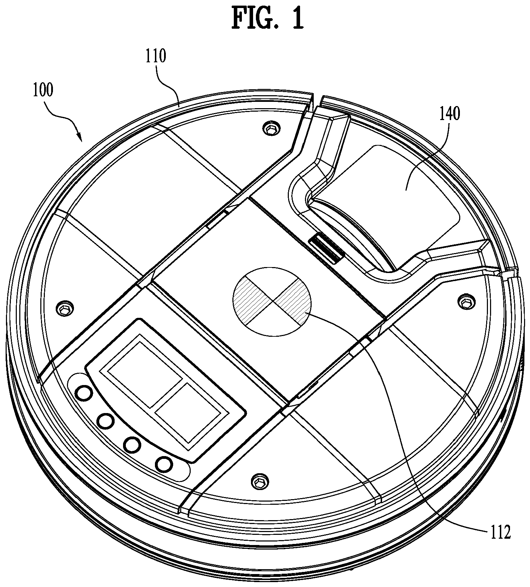

Referring to FIGS. 1, 2 and 3, a structure of the robot cleaner composing the robot cleaner system will be described.

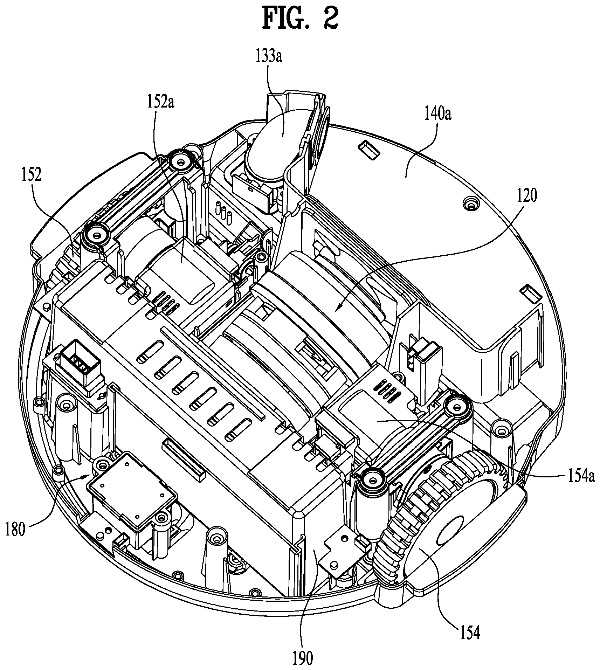

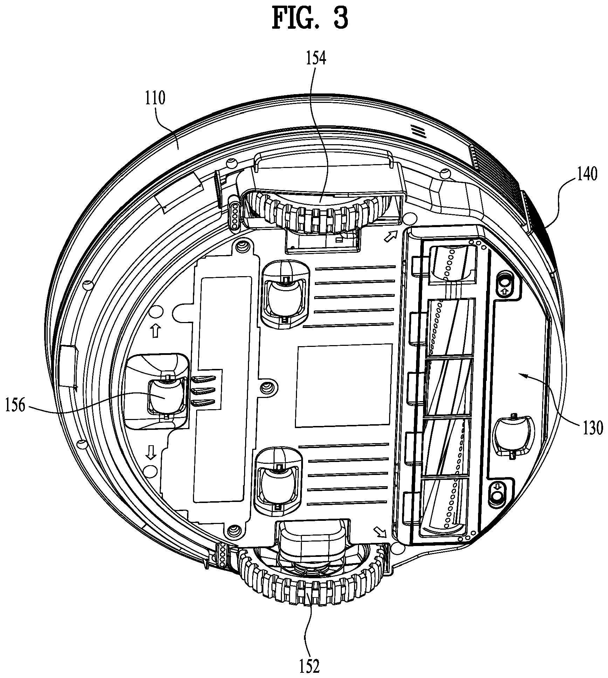

FIG. 1 is a perspective diagram illustrating a robot cleaner according to one embodiment of the disclosure. FIG. 2 is a perspective diagram illustrating an inner structure of the robot cleaner according to one embodiment of the disclosure. FIG. 3 is a lower perspective diagram of the robot cleaner according to one embodiment of the disclosure.

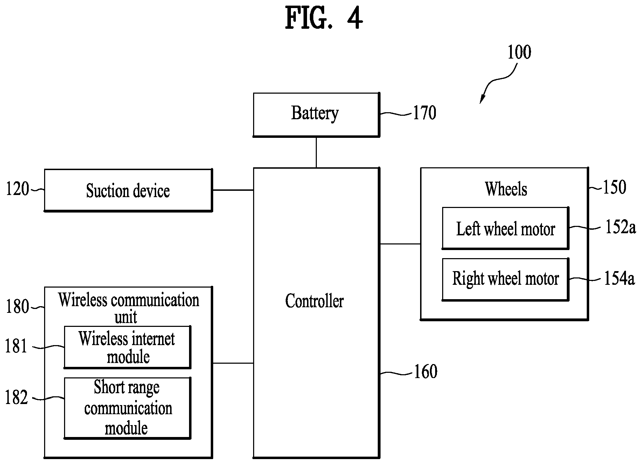

FIG. 4 is a block diagram of a robot cleaner composing a robot cleaner system according to one embodiment of the disclosure.

The robot cleaner 100 may include a cleaner case 110 that defines an exterior appearance of the robot cleaner 100, a suction device 120 provided in the cleaner case 110, a suction nozzle 130 configured to suck dust on the floor via the driving of the suction device 120 and a dust collector 140 configured to collect foreign matters from the sucked air.

The cleaner case 110 of the robot cleaner 100 may be formed in a cylinder shape with a relatively smaller height than a diameter, in other words, a flat cylinder shape. It may have a square shape with circular corners. In the cleaners 110 may be provided the suction device 120, the suction nozzle 130 and the dust collector 140 in communication with the suction nozzle 130.

In an outer circumferential surface of the cleaner case 110 may be provided a sensor (not shown) configured to sense a distance to a wall or an obstacle in a room, a bumper (not shown) configured to damp a shock generated by collision and wheels 150 configured to move the robot cleaner 100.

The wheels 150 may consist of a left driving wheel 152 and a right driving wheel 154 which are installed in both lower portions of the cleaner case 110, respectively. the left and right driving wheels 152 and 154 are configured to be rotated by a left wheel motor 152a and a right wheel motor 154a controllable by a cleaner controller 160, respectively, such that the robot cleaner 100 can change a direction in accordance with the driving of the left and right wheel motors 152a and 154a automatically, while performing room-clean.

At least auxiliary wheel 156 may be provided in a bottom of the cleaner case 110 and the auxiliary wheel 156 may minimize friction between the robot cleaner 100 and the floor and guide the motion of the robot cleaner 100 simultaneously.

Moreover, recognition means may be provided in the cleaner case 110 and such recognition means may be provided to map an actual region in which the robot cleaner is located and a virtual region. Also, the recognition means may be various types with various shapes and it may be provided in the cleaner case or an outer surface of the cleaner case. In other words, the recognition means may be recognized via a camera outside the robot cleaner.

In FIG. 2, a recognition mark 112 is shown as one example of the recognition means. The recognition mark 112 shown in FIG. 2 may be provided on an upper surface of the cleaner case 110 and it may have various patterns. Also, a position of the recognition means may be changed in various ways and the number of the positions may be changeable. The recognition means may allow the actual region where the robot cleaner 100 is located may be mapped with the virtual region in an external device. For example, the actual region where the robot cleaner 100 is located may be mapped with a virtual region displayed on the external device, which will be described specifically later.

FIG. 4 is a block diagram of a cleaner controller 160 provided in the robot cleaner 100. The cleaner controller 160 linked to various components of the robot cleaner 100 to control the driving of the robot cleaner 100 may be provided in the cleaner case 110, for example, a front portion inside the robot case 110. Also, a battery 170 configured to supply a power to the suction device 120 may be provided in the cleaner case 110, for example, a rear portion inside the robot case 110.

The suction device 120 configured to generate an air suction force may be provided behind the battery 170 and the dust collector 140 may be detachably coupled to a rear portion of a dust collector coupling part provided in a rear portion of the suction device 120.

The suction nozzle 130 may be provided under the dust collector 140 and it may suck foreign matters with air. The suction device 120 may include a fan (not shown) inclinedly installed between the battery 170 and the dust collector 140, with being connected to a motor (not shown) electrically connected to the battery 170 and a shaft of the motor to blow air.

The suction nozzle 130 may be exposed to a bottom of the cleaner case 110 via a hole (not shown) formed in the bottom of the cleaner case 110, only to contact with the floor of the room.

To control the robot cleaner 100 from a distance, the robot cleaner 100 according to this embodiment may include a first wireless communication unit 180 that can wirelessly communicate with an external device.

The first wireless communication unit 180 may include one or more modules that enable the robot cleaner 100 to wirelessly communicate with an external device or an external network. For example, the first wireless communication unit may include a wireless internet module and a short range communication module.

The wireless internet module is a module for wireless internet link and it may be an internal element or an external element of the robot cleaner 100. Examples of wireless internet technologies may include WLAN (Wireless LAN) (Wi-Fi), WiBro (Wireless Broadband), WiMax (World Interoperability for Microwave Access) and HSDPA (High Speed Downlink Packet Access).

The short range communication module is a module for short range communication. Examples of short range communication may include Bluetooth, RFID (Radio Frequency Identification), IrDA (Infrared Data Association and UWB (Ultra Wideband Zigbee).

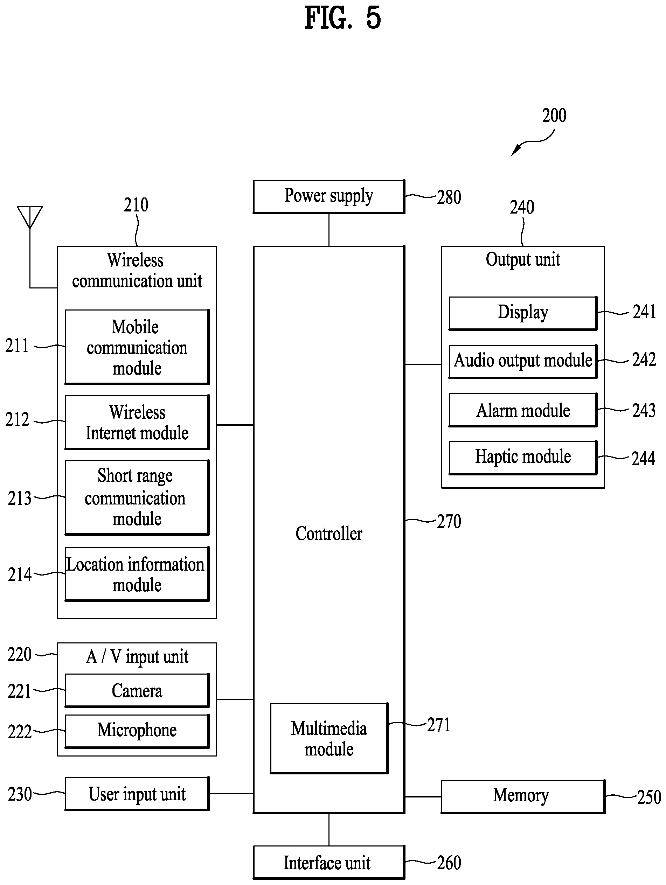

Next, referring to FIGS. 5, 6 and 7, an example of the remote control device 200 composing the robot cleaner system will be described.

FIG. 5 is a block diagram of the remote control device composing the robot cleaner system according to one embodiment of the disclosure.

The remote control device 200 in the present disclosure is a device remote-accessible to the robot cleaner 100 to control the driving of the robot cleaner 100. Examples of the remote control device may include a smart phone, PDA (Personal Digital Assistant) and PMP (Portable Multimedia Player).

For convenient explanation of the disclosure, a smart phone is adopted as the remote control device 100 of the robot cleaner 100.

The remote control device 200 may include a wireless communication unit 210, AV (Audio/Video) input unit 220, a user input unit 230, an output unit 240, a memory 250, an interface unit 260, a terminal controller 270 and a lower supply unit 280. The components shown in FIG. 5 are not necessarily provided and a remote control device 200 having more or less components may be realized.

Each of the components will be described in order.

The wireless communication unit 210 (a second wireless communication unit) may include one or more modules that enables wireless communication between wireless communication systems or wireless communication between the remote control device 200 and a network in which the remote control device 200 is located. For example, the second wireless communication unit 210 may include a mobile communication module 211, a wireless internet module 212 and a short range communication module 213.

The mobile communication module 211 transmits and receives a wireless signal to and from one or more of a base station, an external terminal a server on a mobile communication network. Such a wireless signal may include various types of data in accordance with transmission/receiving of a voice call signal, a video call signal or a texture/multimedia message.

The wireless internet module 212 is a module for wireless internet link and it may be an internal or external element of the remote control device 200. Examples of wireless internet technologies may include WLAN (Wireless LAN) (Wi-Fi), WiBro (Wireless Broadband), WiMax (World Interoperability for Microwave Access) and HSDPA (High Speed Downlink Packet Access).

The short range communication module 213 is a module for short range communication. Examples of short range communication may include Bluetooth, RFID (Radio Frequency Identification), IrDA (Infrared Data Association and UWB (Ultra Wideband Zigbee).

Referring to FIG. 5, the A/V input unit 220 is for inputting an audio signal or a video signal and it may include a camera 221 and a microphone 222. The camera 221 processes image frames of a video file or a still image gained by an image sensor in a video call mode or camera mode. The processed image frame may be displayed on a display 241.

The image frame processed by the camera 221 may be stored in the memory 250 or transmitted to an external device via the second wireless communication unit 210. Two or more cameras 221 may be provided in accordance with a service environment.

The microphone 222 converts an external audio signal received from the outside into electric voice data in a call or record mode and a voice recognition mode. In the call mode, the processed voice data may be converted into a transmittable signal and output to a mobile communication base station by the mobile communication module 211. In the microphone 222 may be realized various types of noise rejection algorisms for reflecting the noise generated while receiving the external audio signal.

The user input unit 230 generates data for the user to control the operation of the remote control device 200. The user input unit 230 may consist of a key pad, a dome switch, a touch pad (static pressure/capacitive type), a jog wheel and a jog switch.

The output unit 240 may generate output associated with visual, auditory or tactual sense. The output unit 240 may include a display 241, an audio output module 242, an alarm unit 243 and a haptic module 244.

The display 241 displays, in other words, outputs the information processed in the remote control device 200. For example, the display 241 may display UI (User Interface) or a GI (Graphic User) interface associated with a call when the remote control device 200 is in a call mode. When the remote control device 200 is a video call mode or a camera mode, the display 241 may display photographing and/or received image or UI and GUI.

The display 241 may include at least one of a liquid crystal display (LCD), a thin film transistor liquid crystal display (TFT LCD), an organic light emitting diode (OLED), a flexible display and a 3D display.

Two or more displays 241 may be provided in accordance with a realizing type of the remote control device 200. For example, a plurality of displays 241 may be arranged in one surface at intervals or integrally, or they may be arranged in different surfaces, respectively.

When the display 241 and a sensor for sensing touch input (hereinafter, 'a touch sensor') form a layer structure (hereinafter, 'a touch screen'), the display 241 may be used as an input device as well as an output device. The touch sensor may have a touch film, a touch sheet and a touch pad.

The touch sensor may be configured to convert a pressure applied to a specific point of the display 241 or change in capacitances generated in a specific point into an electric input signal. The touch sensor may detect a position of input touch and an area of the input touch. Also, it may detect a pressure applied in the touch input.

When the touch input is sensed by the touch sensor, a signal(s) corresponding to the touch may be transmitted to a touch controller. The touch controller processes the signal(s) and transmits data corresponding to the signal(s) to the terminal controller 270. After that, the terminal controller 270 may the terminal controller 270 may determine which point is touched on the display 241.

The audio output unit 242 may output audio data received from the second wireless communication unit 210 or stored in the memory 250 in call signal receiving, a call or record mode, a voice recognizing mode and a broadcasting receive mode. The audio output unit 242 may output an audio signal associated with functions performed by the remote control device 200 (e.g., a call signal receiving sound and a message receiving sound). Such the audio output unit 242 may include a receiver, a speaker and a buzzer.

The alarm unit 243 outputs signal for notifying event generation of the remote control device 200. Examples of the event generated in the remote control device 200 may include call signal receiving, message receiving, key signal input and touch input. The alarm unit 243 may also output another type signal rather than the video or audio signal. The alarm unit 243 may output a vibration signal for notifying the event generation. The video or audio signal may be output even via the display 241 or the audio output module 242 and both of the display 241 and the audio output module 242 may be categorized as the alarm unit 243.

The haptic module 244 generates various tactile or haptic effects sensed by the user. A typical example of the haptic effects generated by the haptic module 244 may be vibration. Intensity and a pattern of the vibration generated by the haptic module 244 may be controllable. For example, different vibrations may be compounded and output or they may be sequentially output.

The memory 250 may store a program for operating the terminal controller 270 or temporarily store input/output data (e.g., a phone book, a message, a still image and a motion picture) therein. The memory 250 may store various patterned vibrations and sounds output after the touch input.

The memory 250 may include at least one of storage medium including a flash memory type, a hard disk type, a multimedia card micro type, a card type memory (e.g., a SD or XD memory), RAM (Random Access Memory), SRAM (static Random Access Memory), PROM (Programmable Read-Only Memory), MRAM (Magnetic Random Access Memory), a magnetic disk and an optical disk. The remote control device 200 may be operated in association with a web storage performing a storage function of the memory 250 on an internet

The interface unit 260 may be employed as a passage to all of the external devices connected with the remote control device 200. The interface 260 may be provided with data or the power by the external devices and transmit the data or power to each of the elements or transmit data of the remote control device 200 to the external device. for example, the interface unit 260 may include a wire/wireless headset port, an external charger port, a wire/wireless data port, a memory card port, a port for connecting a device having an identify module, an audio I/O (Input/output) port, a video I/O port and an earphone port.

The identify module is a chip storing a variety of information therein to identify an authority for use of the remote control device 200. The identification module may include SIM (Subscriber Identify Module) and USIM (Universal Subscriber Identity Module). A device having the identify module (hereinafter, "identify device") may be fabricated to be a smart card. Accordingly, the identify device may be connected to the remote control device 200 via a port.

The terminal controller 270 typically controls an overall operation of the remote control device. For example, the terminal controller 270 performs control and process associated with voice call, data communication and video call. The terminal controller 270 may include a multimedia module 271 for playing multimedia. The multimedia module 271 may be realized in the terminal controller 270 or separately realized.

The terminal controller 270 may process pattern recognition for recognizing handwriting input or drawing input performed on a touch screen as characters and images.

The power supply unit 280 may be provided with an external power or internal power in accordance with the control of the controller 270 and supply a power required by the operation of the components.

The embodiment of the present disclosure may be realized in a computer or readable media similar to the computer, using a software, a hardware or combination of the software and the hardware.

In hardware realization, the embodiments described herewith may be realized by using at least one of ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, micro-controllers, microprocessors and electric units for performing other functions. In some cases, the embodiments may be realized by the terminal controller 270.

In software realization, embodiments such as processes and functions may be realized together with an auxiliary software module performing one or more functions or operations. A software code may be realized by a software application written in a proper program language. The software code may be stored in the memory 250 and performed by the terminal controller 270.

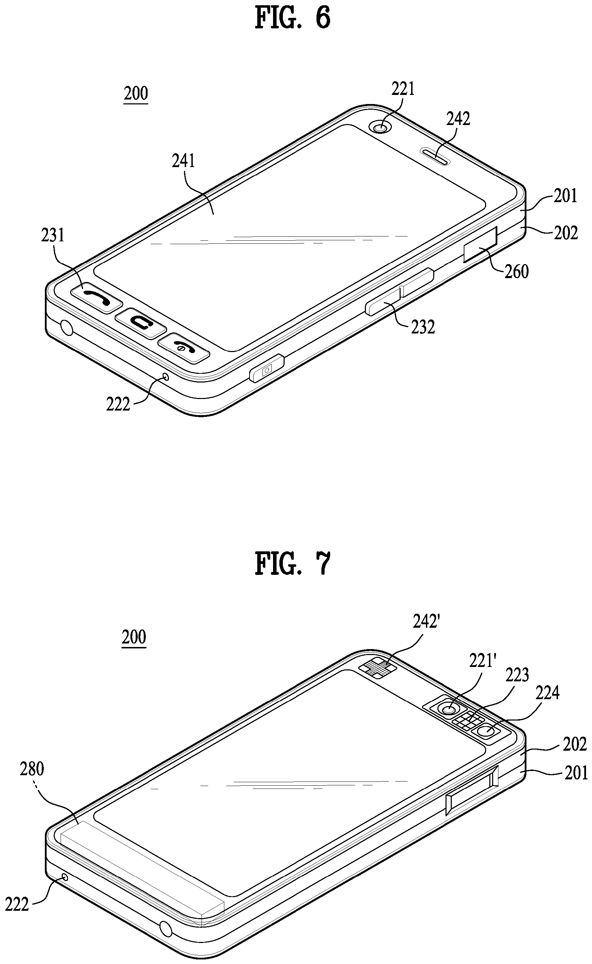

FIG. 6 is a front perspective diagram of the remote control device composing the robot cleaner system according to one embodiment of the disclosure, seen in front.

The remote control device 200 described above includes a bar-shaped body and the embodiments are not limited thereto. The remote control device may be a slide type, a folder type, a swing type and a swivel type, with two or more bodies relative-movably coupled to each other.

The body includes a case (e.g., a casing, a housing and a cover) for defining an exterior appearance of the remote control device 200. In this embodiment, the case may be divided into a front case 201 and a rear case 202. Various electronic components are mounted in a space formed between the front case 201 and the rear case 202. One or more intermediate cases may be additionally arranged between the front case 201 and the rear case 202.

The cases may be injection-molded of synthetic resin or they may be formed of a metallic material (e.g., stainless steel (STS) and titanium (Ti)).

In the body of the remote control device 200, mainly, in the front case 201 may be arranged the display 241, the audio output unit 242, the camera 221, the input units 230/231 and 232, the microphone 222 and the interface 160.

The display 241 occupies most of a main surface possessed by the front case 201. The audio output unit 242 and the camera 221 may be arranged adjacent to one of ends of the display 241. The input unit 231 and the microphone 222 may be arranged adjacent to the other end. The input unit 232 and the interface 160 may be arranged in lateral surfaces of the front and rear cases 201 and 202.

The user input unit 230 may be operated by the user to receive an input command for controlling the operation of the remote control device 200. The user input unit 230 may include a plurality of manipulating units 231 and 232. The manipulating units 231 and 232 may be called as a manipulating portion. Any tactile manners in which the user manipulates, with a tactile sense may be applied.

The contents input by the first or second manipulating units 231 and 232 may be set in various manners. For example, the first manipulating unit 231 receives an input command (e.g., a start command, an end command and a scroll command). The second manipulating unit 232 may receive an input command (e.g., controlling of a sound output from the audio output unit 242 and conversion into a touch recognition mode of the display 241).

FIG. 7 is a rear perspective diagram of the remote control device composing the robot cleaner according to one embodiment of the disclosure.

Referring to FIG. 7, a camera 221' may be additionally mounted in a rear surface of the body possessed by the remote control device 200, in other words, in the rear case 202. The camera 221' may have a photographing direction substantially opposite to a photographing direction of the camera (221, see FIG. 6) and it may have pixels different from the pixels of the camera 221.

For example, the camera 221 may have low pixels which cause no problems in transmitting a photograph of the user's face to the other opponent on a video call. The camera 221' may have high pixels because it is often not to transmit a conventional object immediately after photographing. The camera 221' may be coupled to the body of the remote control device 200 with rotatable or being able to pop up.

A flash 123 and a mirror 124 may be additionally arranged adjacent to the camera 221'. The flash 123 flashes a light upon an object when the camera 221' photographs an object. The user may reflect the face in the mirror 124 when trying to photograph himself or herself (in other words, self-photograph).

An audio output unit 242' may be additionally arranged in a rear surface of the body possessed by the remote control device 200. The audio output unit 242' may realize a stereo function, together with the audio output unit (242, see FIG. 6). The audio output unit 242' may be used in realizing a speaker phone during the call.

A power supply unit 280 may be mounted to the body of the remote control device 200 to supply a power to the remote control device 200. The power supply unit 280 may be mounted in the body of the remote control device 200 or directly and detachably coupled to an outer surface of the body possessed by the remote control device 200.

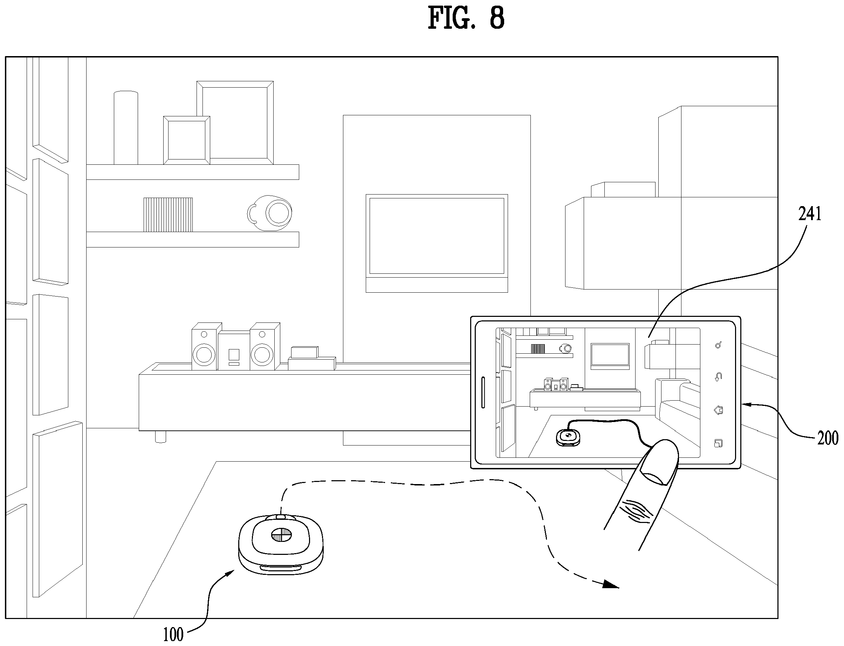

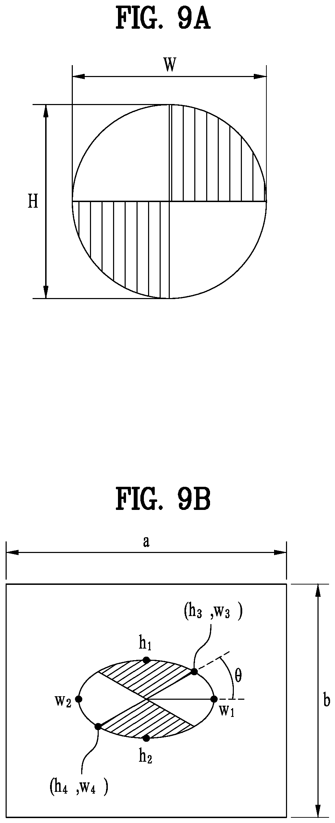

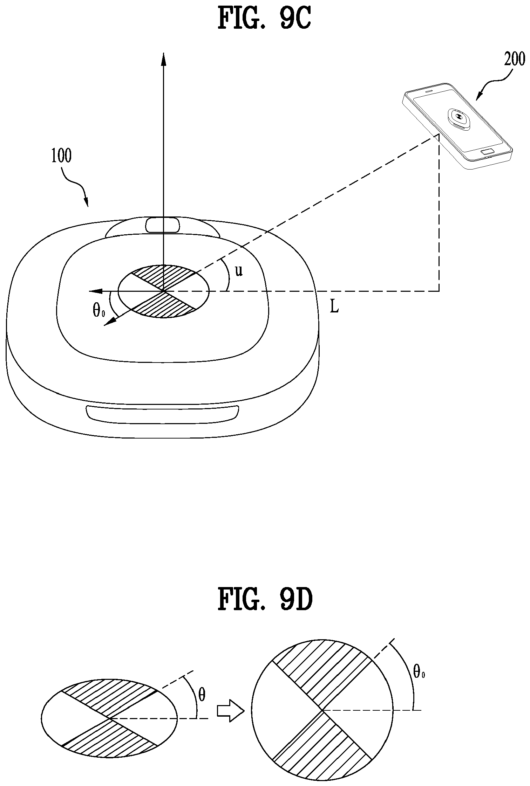

FIG. 8 is a diagram illustrating a method for generating image information of a robot cleaner in the robot cleaner system according to one embodiment of the disclosure. FIG. 9 is a diagram illustrating a method for generating location information of a robot cleaner in the robot cleaner system according to one embodiment of the disclosure. Referring to FIGS. 8 and 9, a method for generating the image information and the location information on the robot cleaner 100, using the remote control device, will be described.

As mentioned above, the robot cleaner system according to one embodiment of the present disclosure includes the remote control device 200 so as to control the driving of the robot cleaner 100 at a distance. However, for the remote control device 200 to control the driving of the robot cleaner 100, information on a precise location of the robot cleaner 100 has to be provided. Specifically, it is necessary to map an actual region and a virtual region with each other.

To solve the necessity, location information of the robot cleaner 100 may be generated by sensing the robot cleaner 100 based on the image information generated via the camera 221' of the remote control device 200 in the robot cleaner system according to one embodiment of the present disclosure.

First of all, the camera 221' provided in the rear surface of the body composing the remote control device 200 photographs the robot cleaner 100 and a region near the robot cleaner 100, only to generate image information. The generated image information of the robot cleaner 100 is transmitted to the terminal controller 270.

Hence, the remote control device 200 may map an actual region where the robot cleaner 100 is located with a virtual region displayed as the image information, based on the image information, as shown in FIG. 8. That means that the remote control device 200 senses the robot cleaner 100.

As mentioned above, the recognition mark 112 allowing the external device to sense the robot cleaner 100 may be provided in the upper surface of the robot cleaner 100 (see FIG. 1). The shape of the recognition mark 112 is not limited specific ones. For example, the recognition mark 112 may be formed in a circular shape shown in FIG. 9a. In this instance, the width (W) and the height (H) of the recognition mark 112 have the same value.

An actual shape of the recognition mark 112 is stored in the memory 250 of the remote control device 200. In other words, information on the recognition mark 112 (e.g., the actual size of the recognition mark 112) is stored in the memory 250. The terminal controller 270 may extract the recognition mark 112 on an image of the image information and it is determined that whether the extracted recognition mark 112 is available, such that the robot cleaner 100 can be sensed based on the result of the determination.

The terminal controller 270 may check a shape, a pattern or a specific color of the recognition mark 112, to extract the recognition mark 112 on the image of the image information.

However, in case the image information has a bad image quality, it is difficult for the terminal controller 270 to sense the recognition mark 112. The terminal controller 270 may improve the image quality of the image information before extracting the recognition mark 112 from the image of the image information.

The terminal controller 270 may perform image brightness control, noise rejection and color correction to improve the image quality of the image information.

After that, the remote control device 200 may compare information on an actual shape of the recognition mark 112 with a relative shape figured out by the image information and generate the location information of the robot cleaner 100 based on the result of the comparison. In other words, mapping between the actual region and the virtual region may be performed.

When the user photographs the robot cleaner 100 and a region near the robot cleaner 100, using the camera 221' of the remote control device 100, the user may photograph the robot cleaner 100 and the region in a state of raising the remote control device 200 to a predetermined height. In other words, the user takes a picture while looking down on the robot cleaner 100.

Accordingly, the height of the recognition mark 112 provided in the robot cleaner 100 is smaller than the width on the image of the image information in accordance with an angle at which the user is looking down on the robot cleaner 100 as shown in FIG. 9b.

The relative shape and size of the recognition mark 112 extracted from the image information may be changed in accordance with a posture of the robot cleaner 100 and a distance between the robot cleaner 100 and the remote control device 200. The actual shape and size of the recognition mark 112 extracted from the image information may be changeable in accordance with the posture of the robot cleaner 100 and a distance between the robot cleaner 100 and the remote control device 200.

The actual shape of the recognition mark 112 is different from the relative shape extracted from the image information, corresponding to the location and posture of the robot cleaner 100. Accordingly, the actual shape of the recognition mark 112 is compared with the relative shape extracted from the image information and the location and posture of the robot cleaner 100 may be figured out based on the result of the comparison. Also, a distance between the user and the robot cleaner 100 and a photographing angle may be figured out. The scale between the virtual region displayed on the image information and the actual region can be figured out.

Next, there will be described a specific method for recognizing the location and posture of the robot cleaner 100 based on the result of the comparison between the actual shape of the recognition mark 112 and the relative shape figured out from the image information or mapping between the virtual region and the actual region.

Following mathematical formulas may be used in recognizing the location and posture of the robot cleaner 100 from the relative shape of the recognition mark 112.

[Mathematical Formula 1]

$$v = c \times \left( \frac{\Delta w}{a} \right)$$ .

c: camera horizontal view angle
$\Delta w$: w1-w3[pixel]
a: image vertical photograph resolution [pixel]

[Mathematical Formula 2]

$$L = W / \tan(v)$$

L: distance between robot cleaner and remote control device
W: actual width [mm] of robot cleaner
V: view angle corresponding to $\Delta w$

[Mathematical Formula 3]

$$u = \sin^{-1}\left(\frac{\Delta h}{\Delta w}\right)$$

U: elevation angle of remote control device
$\Delta h$: h1 - h2 [pixel]
$\Delta w$: w1 - w2 [pixel]

[Mathematical Formula 4]

$$\theta = \tan^{-1}\left(\frac{h3 - h4}{w3 - w4}\right)$$

$\theta$ : azimuth of recognition mark

[Mathematical Formula 5]

$$\theta_0 = \tan^{-1}\left(\left(\frac{h3 - h4}{t}\right) \times \left(\frac{1}{w3 - w4}\right)\right)$$

$\theta_0$: compensated azimuth of recognition mark
r: $\Delta h / \Delta w$ (H/W ratio)

FIG. 9c illustrates an example of images of the image information generated by the camera 221' on the robot cleaner 100 and the region near the robot cleaner 100. A horizontal photograph resolution of an image is "a" [pixel] and a vertical photograph resolution is "b" [pixel]. A horizontal view angle of the camera 221 is "c°" and it means that an image of the image information has "a*b" resolution and "c°" horizontal view angle.

First of all, the distance between the robot cleaner 100 and the remote control device 200 can be calculated, using Mathematical Formula 1 and Mathematical Formula 2.

A horizontal view angle "v°" of the recognition mark 112 may be calculated by using a horizontal view angle "c°", a vertical length "$\Delta h$" [pixel] of the recognition mark 112 on the image of the image information and a horizontal length "$\Delta w$" [pixel] of the recognition mark 112 on the image of the image information, as mentioned in Mathematical Formula 1.

The calculated horizontal view angle "v°" of the recognition mark 112 is substituted to Mathematical Formula 2 and a horizontal distance (L) between the robot cleaner 100 and the remote control device 200 is gained as shown in FIG. 9c.

After that, an elevation angle "u°" at which the remote control device 200 is looking down on the robot cleaner 100 may be gained as shown in FIG. 9c, using Mathematical Formula 3.

Hence, an azimuth of the recognition mark 112 indicating the posture of the robot cleaner 100 may be gained, using Mathematical Formula 4 and 5.

The recognition mark 112 on the image of the image information may have a circular or oval shape with the width ($\Delta$ w) larger than the height ($\Delta$ h). Accordingly, an azimuth "$\theta$" of the recognition mark 112 on the image of the image information shown in FIG. 9d is the same as or smaller than an azimuth "$\theta$ 0" of the actual recognition mark 112. In other words, when the elevation angle of the remote control device 200 is 90°, $\theta = \theta_0$ and when the elevation angle is less than 90°, $\theta < \theta_0$.

Accordingly, r(H/W ratio) is applied to Mathematical Formula 4 for calculating a relative azimuth "$\theta$" figured out from the image of the image information, such that Mathematical Formula 5 for calculating the actual azimuth "$\theta_0$". As a result, the actual azimuth "$\theta_0$" of the recognition mark 112 is calculated and a current posture of the robot cleaner 100 is then figured out.

In the robot cleaner 100 according to one embodiment of the present disclosure, the robot cleaner 100 including the recognition mark 112 may be sensed by the remote control device 200 including the camera 221' and also the location information of the robot cleaner 100 indicating the location and the posture of the robot cleaner 100 may be generated.

Meanwhile, it is assumed that the robot cleaner 100 is driving on a plane surface. Specifically, the actual cleaning region is shown on the plane and a virtual region having a different scale from such the actual cleaning region may be shown, such that the actual cleaning region and the virtual region may be mapped with each other based on the mathematical formulas mentioned above.

The location information of the robot cleaner 100 may be displayed on the display 241 provided in the remote control device 200 and a location base service of the robot cleaner 100 may be provided to the user based on the location information. In other words, various types of location based services may be provided by mapping between the virtual region and the actual region. The location based service of the robot cleaner 100 will be described in detail later.

Meanwhile, in a robot cleaner system according to another embodiment of the present disclosure, appearance information of the robot cleaner 100 may be stored in a memory of a remote control device 200, not using the recognition mark 112, such that the location information of the robot cleaner 100 may be generated.

Specifically, an actual shape of the robot cleaner 100 is compared with a relative shape figured out by image information. A location and a posture of the robot cleaner 100 may be recognized based on the result of the comparison. This embodiment of the present disclosure is identical to the embodiment described above, except the shape information of the robot cleaner 100 may be used in figuring out the location and the posture of the robot cleaner 100. Repeated description of this embodiment is omitted.

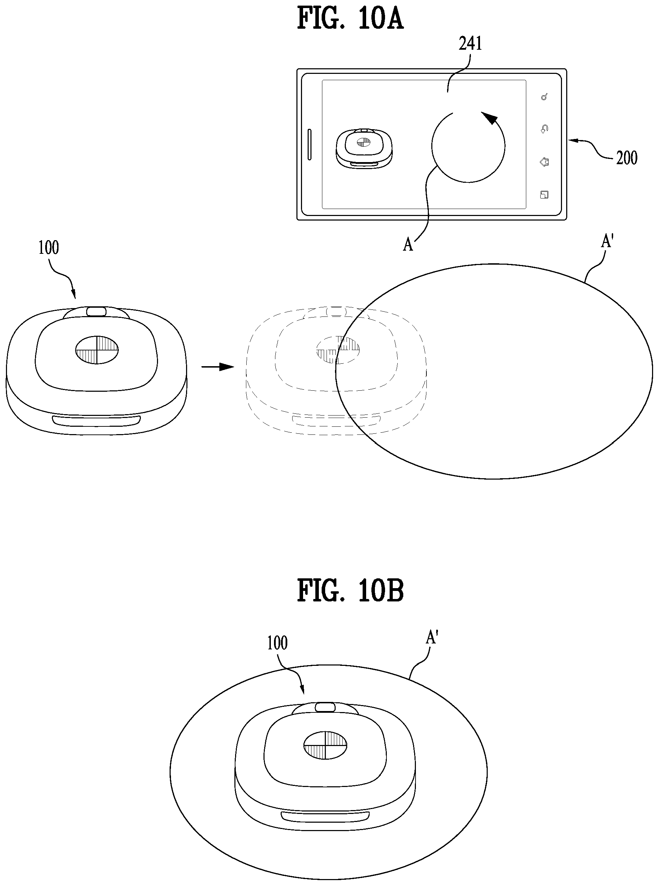

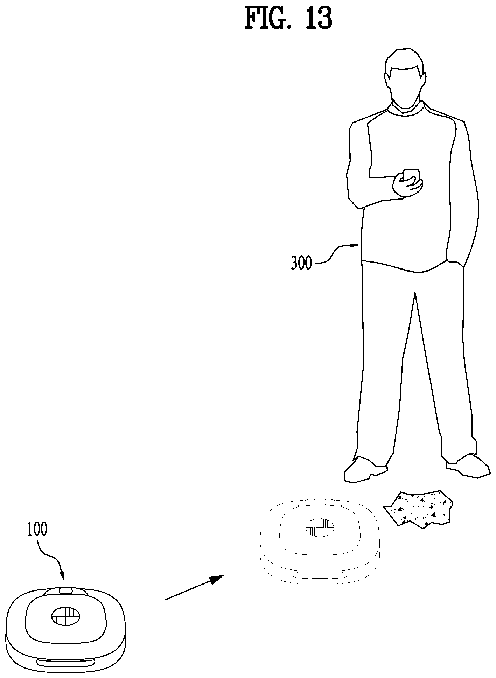

FIGS. 10, 11, 12 and 13 are diagrams illustrating the location based service of the robot cleaner 100 provided by the robot cleaner system according to one embodiment of the present disclosure. Referring to FIGS. 10, 11, 12 and 13, the location based service of the robot cleaner 100 will be described as follows.

As mentioned above, the remote control device 200 may generate the image information on the robot cleaner 100 and the region near the robot cleaner 100. Then the remote control device 200 may sense the robot cleaner 100 based on the image information and generate the location information on the robot cleaner 100.

In addition, the display 241 may output image information on the robot cleaner 100 and the region near the robot cleaner 100. Especially, the terminal controller 270 controls the robot cleaner 100 to be selectable on a screen of the display 241 based on the location information on the robot cleaner 100, such that the user may control the driving of the robot cleaner 100 while watching a current state of the robot cleaner 100 via the display 241.

To control the driving of the robot cleaner 100, the remote control device 200 may further include an input unit configured to input a control signal of the robot cleaner 100. The microphone 222, the user input unit 230 and the display 241 having a touch sensor for sensing a touch input may be functioned as the input unit.

When the control signal of the robot cleaner 100 is input to the remote control device 200, the second wireless communication unit of the remote control device 200 may transmit the control signal to the first wireless communication unit 180 such that the robot cleaner 100 can be driven by the cleaner controller 160 in accordance with the control signal.

Next, location based services of the robot cleaner 100 which can be provided via the input unit of the remote control device 200 will be described, referring to the drawings.

First of all, a location based service of the robot cleaner 100 which can be provided via a touch input to the display 241 will be described.

For example, a cleaning region of the robot cleaner 100 may be set via touch input. When a virtual region (A) shown in FIG. 10a is designated on the screen of the display 241, the terminal controller 170 designates an actual region (A') of a room corresponding to the virtual region (A) as the cleaning region. Accordingly, the robot cleaner 100 may perform cleaning after moving to the cleaning region as shown in FIG. 10b. In other words, the virtual region displayed on the display 241 may be mapped with the actual region and an actual motion coordinate may be transmitted to the robot cleaner.

For example, if the virtual region (A) designated on the display 241 is a region 5 centimeters distant from a center of the robot cleaner on the display 241 to the right, the actual region (A') may be mapped to a region 1meter distant from a center of the actual robot cleaner to the right. Such mapping may be performed based on mapping information of comparing a shape and a size of the actual recognition means with a relative shape and a relative size of the recognition means on the image information, as mentioned above. Accordingly, the mapping information gained after mapping the virtual region to the actual region may be transmitted to the robot cleaner 100 and the cleaner may perform cleaning based on the mapping information.

Specifically, in one embodiment of the present disclosure, a cleaning region may be simply set by a touch input via an image (in other words, a virtual region) of a room output on the display 241. Accordingly, the robot cleaner can perform cleaning only for the region desired to clean and the cleaning time can be reduced. Also, power consumption may be reduced.

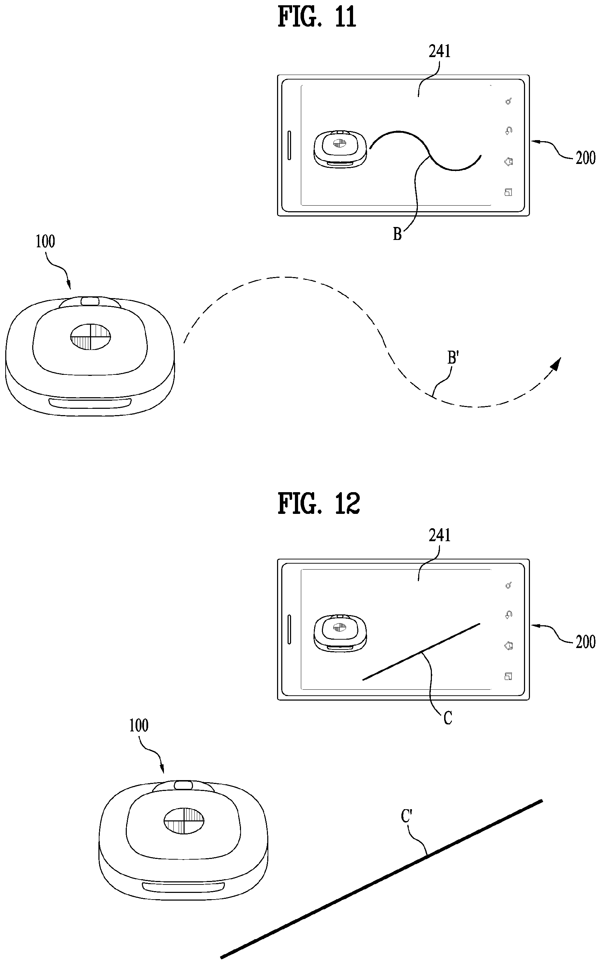

Meanwhile, a passage of the robot cleaner 100 may be set by a touch input. When a passage (B) is designated on a screen of the display 241 shown in FIG. 11, the terminal controller 270 designates a passage (B) on a room corresponding to the passage (B) as the passage of the robot cleaner 100. Accordingly, the robot cleaner 100 can move to a target point along the designated passage.

In one embodiment of the present disclosure, the passage of the robot cleaner 100 may be set by the touch input via the image of the room output on the display 241. Accordingly, the robot cleaner 100 may automatically move along a route set by the user and the delay time which might be generated by changing a moving direction of the robot cleaner in real time via a direction key may be removed.

Together with that, the passage of the robot cleaner can consist of a curved line and a straight line mixed freely and it is possible for the user to perform elaborate manipulation.

A do-not-cleaning region of the robot cleaner 100 may be set by a touch input. When a no-cleaning line (C) is designated on the screen of the display 241 shown in FIG. 12, the terminal controller 270 sets an outer region with respect to partitioning lines (C') on the room corresponding to the no-cleaning line (C) as the do-not cleaning region. Accordingly, the robot cleaner 100 may perform cleaning only for an inner region with respect to the partitioning lines (C').

In one embodiment of the present disclosure, a room may be simply divided through an image of a room output on the display 241 and a do-not cleaning region may be set. Accordingly, the do-not cleaning region can be set, without using an auxiliary member (e.g., a Magnet stripe and a virtual wall).

The controlling of the robot cleaner 100 through the touch input may be performed by a medium of the image of the robot cleaner 100 and the region near the robot cleaner 100 output on the display 241, such that the driving of the robot cleaner 100 can be controlled intuitively and elaborately.

The various location based services provided by the touch input may be performed by selecting an icon (not shown) of a corresponding service displayed on the screen of the display 241 after a touch input of the corresponding service is applied as mentioned above. For example, a driving passage shown in FIG. 11 is set on the display 241 and an icon is touched, driving passage information and a driving command may be transmitted to the robot cleaner 100 from the remote control device 200. In this instance, the service may be selected by a voice output from the microphone 222 or by the user input unit 230.

Next, an example of a location based service of the robot cleaner 100 which can be provided by a voice input to the microphone 222 will be described.

For example, the robot cleaner 100 may be called to the user's location through a voice input. When the user inputs a preset mention to the microphone 222 of the remote control device 200, the robot cleaner 100 may move to the location of the remote control device 200, in other words, the user's location based on the location information.

As mentioned above, the robot cleaner may be remote-controlled via the display in accordance with the mapping between an actual region with a virtual region. Accordingly, once the mapping is performed, the user need not watch the actual region or the robot cleaner. Specifically, once the mapping is performed, the user can remote-control the robot cleaner via the display even after moving to other regions. In this instance, wireless communication between the remote control device 200 and the robot cleaner 100 has to be maintained.

Generally, the cleaning region set to be cleaned by the robot cleaner may be fixed. In this instance, the sensing of the robot cleaner performed by the remote control device 200 or the mapping between the actual region and the virtual region may be maintained consistently. Specifically, it is possible to use one sensing or mapping as it is. Accordingly, it is not necessary to photograph the robot cleaner whenever the remote control is performed. When the former photographed image information is stored and the wireless control is performed, the image information may be displayed on the display. After that, the wireless control may be repeatedly performed through a virtual region displayed on the display. If the environment allows wireless communication between the robot cleaner 100 and the remote control device 200, the user may perform wireless control of the robot cleaner even outside.

For example, the robot cleaner is connected to a wireless-communication network via WiFi AP in a house. The remote control device 200 held by the user may be wirelessly linked to the robot cleaner through a server and the WiFi AP. Accordingly, the user can wirelessly control the robot cleaner located in the house outside.

To make such the wireless control performable, the robot cleaner 100 has to move to an initial location. In other words, when a photograph is taken, the robot cleaner 100 may move to the initial location of the robot cleaner 100. Accordingly, initial location information (e.g., coordinate information and posture information) may be stored in the robot cleaner. Once the wireless control starts, the robot cleaner may move to the initial location.

The wireless control of the robot cleaner, using the remote control device 200, may simply perform the original function of the cleaning and additionally provide a pleasure to the user.

So far, the robot cleaner system according to one embodiment of the present disclosure is described. Referring the accompanying drawings, a control method of the robot cleaner according to another embodiment of the present disclosure will be described.

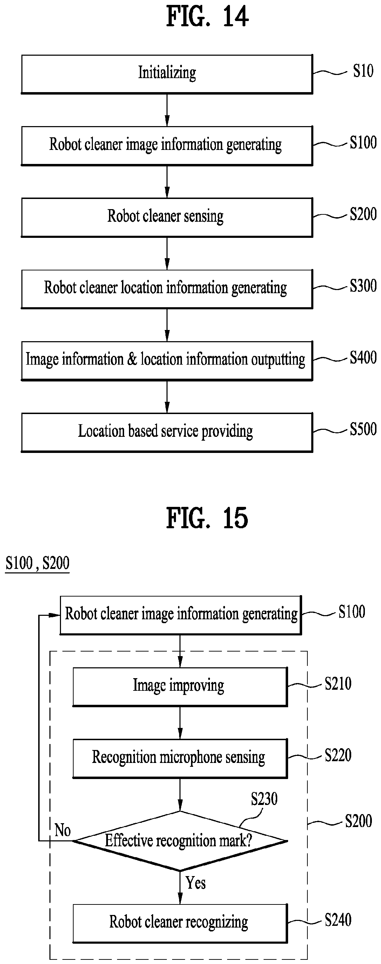

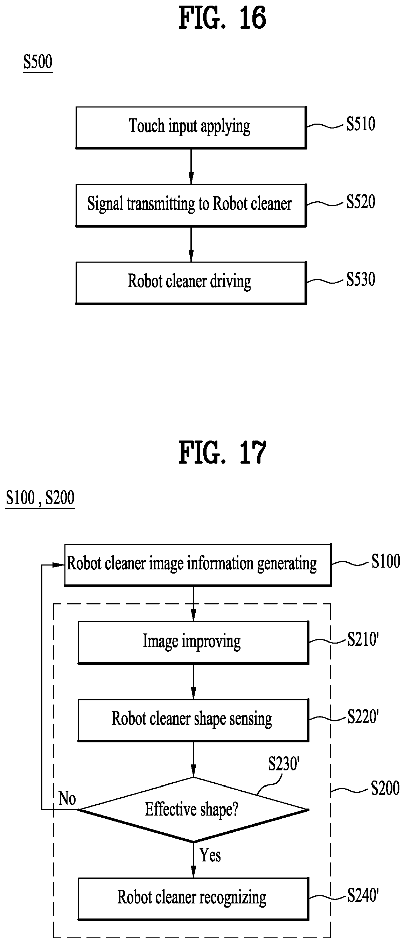

FIG. 14 is a flow chart illustrating a base configuration provided in a control method of a robot cleaner system according to one embodiment of the disclosure. FIG. 15 is a flow chart illustrating a step of sensing the robot cleaner in the control method of the robot cleaner system according to one embodiment of the disclosure. FIG. 16 is a flow chart illustrating a step of providing a location base service in the control method of the robot cleaner system according to one embodiment of the disclosure.

Here, compared with the robot cleaner system according to the embodiment of the present disclosure, repeated description will be omitted or mentioned briefly and the same numeral references are given to the same components.

The control method of the robot cleaner system according to this embodiment including the robot cleaner 100 and the remote control device 200 having the camera 221' and the display 241 may include a step of generating image information on the robot cleaner 100 and the region near the robot cleaner via the camera 221; and a step of sensing the robot cleaner 100 based on the image information. In addition, the control method may further include a step of generating location information of the robot cleaner 100. In other words, a step of mapping an actual region and a virtual region to each other in accordance with the generated image information may be performed.

Meanwhile, a step of outputting the image information and the location information on the display 241 and the step may be performed by generating the image information. After that, a step of providing a location based service may be performed based on the location information.

Referring to FIGS. 14, 15 and 16, the control method of the robot cleaner system will be described.

First of all, there may be performed a step of generating image information on the robot cleaner 100 and the region near the robot cleaner through the camera 221' of the remote control device 200 (S100).

Hence, a step of sensing the robot cleaner 100 based on the image information may be performed (S200). Here, the step of sensing the robot cleaner 100 may be performed by sensing a recognition mark 112 of the robot cleaner 100.

Accordingly, the step (S200) of sensing the robot cleaner 100 may include a step (S210) of improving an image of the image information, a step (S220) of sensing the recognition mark 112 of the robot cleaner 100, a step (S230) of determining whether the sensed recognition mark 112 is effective and a step (S240) of recognizing the robot cleaner 100.

The step (S120) of improving the image of the image information may be performed by the terminal controller 270 of the remote control device 200. More specifically, at least one of image brightness controlling, noise rejection and color correction may be performed.

The step of recognizing the robot cleaner 100 (S240) may be performed by the terminal controller 270 recognizing an object having the effective recognition mark 112 as the robot cleaner 100.

In the step (S230) of determining whether the sensed recognition mark 112 is an effective one, if the sensed recognition mark 112 is not the effective one, the step of generating image information on the robot 100 and the region near the robot cleaner 100 via the camera 221' may be performed again (S260).

After that, a step of generating location information of the robot cleaner 100 (S300) may be performed. Specifically, the step (S300) of generating the location information of the robot cleaner 100 may be performed by comparing an actual shape of the recognition mark 112 with a relative shape recognized by the image information. Here, the terminal controller 270 may generate the location information of the robot cleaner 100 based on factors (e.g., a horizontal view angle, H/W ratio, an elevation angle and an azimuth) of the recognition mark 112 recognized by the image information. Accordingly, the actual region and the virtual region may be mapped to each other.

Hence, a step of outputting the image information and the location information of the robot cleaner 100 on the display 241 (S400) may be performed. In other words, a step of performing mapping by converting a screen of the display 241 after photographing may be performed. After the mapping step is performed, the photographed image information and location information may be output on the display 241. After the photographed images may be displayed on the display 241 consistently, the mapping step may be performed. Accordingly, wireless control may be performed through the display 241, once the mapping is completed.

Here, the terminal controller 270 may display the robot cleaner 100 to be selectable on the screen of the display 241. After that, a step of providing a location bases service based on the location information may be performed (S550). The step of the robot cleaner 100 providing the location based service may include a step of generating a control signal of the robot cleaner 100, a step of transmitting the control signal to the robot cleaner; and a step of driving the robot cleaner 100 in accordance with the control signal.

The step of generating the control signal of the robot cleaner 100 may be performed by applying a touch input to the display 241. Especially, the touch input may be applied by the medium of the image of the robot cleaner 100 and the image of the region near the robot cleaner 100 output on the display 241. As a result, as a preset patterned touch input is applied to drive the robot cleaner 100 so as to provide the location based service, a corresponding control signal may be generated.

As an example of the preset pattern, a circle is drawn on the screen of the display 241 to designate a predetermined region or a passage having curved lines and straight lines is drawn or partition lines are drawn to partition off the screen of the display 241.

As the control signal is input by the touch input, the location based service may include at least one of a passage setting function, a cleaning region designating function and a do-not cleaning region designating unction.

Meanwhile, the location based service may include a function of calling the robot cleaner 100 to the location of the remote control device 200, once a voice call signal is input to the remote control device 200.

The microphone 222 may be provided in the remote control device 200 and the remote control device 200 may transmit a voice call signal to the robot cleaner 100 via the microphone 222, only to call the robot cleaner 100 to the location of the remote control device 200, in other words, the user's location.

FIG. 17 is a flow chart illustrating a step of sensing the robot cleaner in a control method of a robot cleaner system according to another embodiment of the disclosure.

The control method of the robot cleaner system according to this embodiment is identical to the robot cleaner system according to the embodiment, except that the location information of the robot cleaner 100 is generated by sensing shape of the robot cleaner 100.

First of all, a step (S200) of sensing the robot cleaner 100 may include a step (S210') of improving an image of image information, a step of (S220') of sensing a shape of the robot cleaner 100, a step of (S230') of determining whether the sensed shape of the robot cleaner 100 is an effective one, and a step (S240') of recognizing the robot cleaner as shown in FIG. 17.

The shape of the robot cleaner 100 may be stored in the terminal controller 270 of the remote control device 200 and the shape of the robot cleaner 100 may be send from the image information.

In the step of determining whether the sensed shape of the robot cleaner 100 is effective, if the sensed shape is not the effective one, a step (S260') of generating image information on the robot cleaner 100 and a region near the robot cleaner 100 via the camera 221' may be performed.

Hence, a step (S300) of generating location information of the robot cleaner 100 may be performed. The step of generating the location information of the robot cleaner 100 may be performed by comparing an actual shape of the robot cleaner 100 with a relative shape figured out based on the image information. Here, the terminal controller 270 may generate the location information of the robot cleaner 100 based on factors of the robot cleaner 100 (e.g., a horizontal view angle, H/W ratio, an elevation angle and an azimuth).

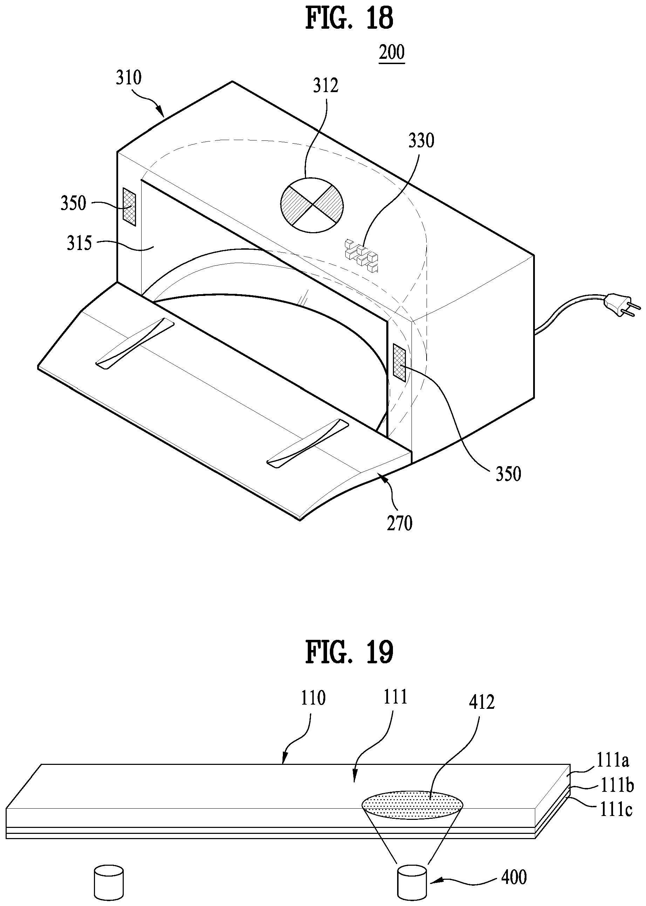

Referring to FIG. 18, another embodiment of the recognition means will be described.

Different from what is shown in FIG. 1, a plurality of recognition means may be provided, not one recognition means. That is because the recognition means could be distorted by photographing and because a small error caused in the mapping process could be substantially getting larger. In addition, the recognition means may be distortedly photographed by an external light source (e.g., sunshine and lightening). Accordingly, three or more recognition means may be provided to compensate such distortion.

As shown in FIG. 1, the recognition means such as the recognition mark 112 may be provided in an outer surface of the cleaner case 110. Accordingly, the recognition mark 112 might cause damage to an exterior design of the robot cleaner. Recently, an artificial design pattern is excluded and the design of the robot cleaner tends to show a natural texture. It is not preferred that the recognition means are provided, against the recent trend.

Accordingly, the recognition means such as the recognition mark 112 may be selectively provided in an outer surface of the case. For example, a detachable sheet type recognition mark 112 is fabricated to perform the wireless control. For that, the recognition mark 112 may be attached to the outer surface of the case, when photographing the robot cleaner. Such the recognition mark 112 may be normally detached from the case.

For example, a plurality of magnets may be provided in the recognition mark 112 and a corresponding number of magnets may be provided in the case. When the user detaches the recognition mark 112, damage to an original exterior design of the robot cleaner can be prevented. Also, it is possible to attach the recognition mark 112 to the cleaner case 110 if necessary. The detached recognition mark 112 may be attached to a door of an electric home appliance (e.g., a refrigerator) and the recognition mark 112 may be fabricated with an easy repair and maintenance.

In the robot cleaner system according to one embodiment may include a recharging base 300 to recharge the robot cleaner. Such a recharging base 3000 is well-known in the art of the robot cleaner. However, the recognition means mentioned above may be provided in the robot cleaner 100 and/or the recharging base. the location based service similar or identical to the location based service through the recognition means may be provided

FIG. 18 illustrates an example of the recharging base 300.

A sensing unit 350 may be provided in the recharging base 300 and such a sensing unit may transmit and receive a signal to and from the short range communication module 182 of the robot cleaner 100. The communication using the sensor unit 350 may enable the robot cleaner 100 to return to the recharging base 300.

The recharging base 300 may include a recharging base case 310. A slot 350 may be provided in the case 210 to mount the robot cleaner 100 to the case 310 and a recharging terminal 330 may be provided in the slot 350.

Generally, the robot cleaner 100 recognizes its location and its posture within a house (a cleaning region) based on SLAM (Simultaneous Location and Mapping). Also, the robot cleaner 100 may figure out the location of the recharging base 300 and also a relative location or posture of itself with respect to the recharging base 300.

Like the mapping the actual region to the virtual region with respect to the robot cleaner 100, an actual region and a virtual region with respect to the recharging base 300 may be mapped to each other. Specifically, the same or similar recognition means may be provided even in the recharging base 300. A recognition mark 312 shown in FIG. 18 is provided as one example of the recognition means.

The user may generate the same image information, using the remote control device 200. In other words, an actual region near the recharging base 300 may be mapped to a virtual region displayed on the display of the remote control device 200 by using the recognition mark 312 provided in the recharging base 300. Also, such the mapping may provide the same location based service mentioned above.

For example, the user may designate a region near the recharging base 300 as a cleaning region, while watching the display. The virtual cleaning region as the actual cleaning region may be transmitted to the recharging base 300 or the robot cleaner 100 based on the mapping information. The robot cleaner 100 recognizes a current location with respect to the recharging base 300 and figures out a designated actual region.

For example, when designating a region 5 centimeters distant from the recharging base 300 to the right in virtual regions, the user may designate a region substantially 3 meters distant to the right based on the mapping information. At this time, the robot cleaner is substantially located 5 meters distant from the recharging base 300, only to be not shown in the virtual region. Nevertheless, the robot cleaner 100 is figuring out its location with respect to the recharging base and then driving to the actual region to perform cleaning.

Accordingly, the recognition means may be provided in the recharging base 300 and similar effect can be gained. In this instance, the robot cleaner 100 is not substantially photographed and the recharging base 300 is generally fixed, such that a controllable region may be restricted to the region near the recharging base 300.

As mentioned above, the robot cleaner system capable of providing the location based service by mapping the virtual region and the actual region to each other via the recognition means provided in the robot cleaner 100 or the recharging base 300 and the control method of the robot cleaner system are described in detail. Specifically, the recognition mark as the recognition means is described in detail.

However, the recognition mark 112 and 312 as the recognition means could affect an exterior design of the recharging base 300 provided in the robot cleaner system. Recently, a minimal design for expressing an original texture or color of a material to the exterior design is preferred. Such the recognition means as the recognition mark 112 and 312 might cause damage to the exterior design, in an aspect of the minimal design.

Accordingly, there is necessity for recognition means capable of sensing an original design of the robot cleaner 100 or the recharging base 300 easily, without causing the damage to the original design.

As shown in FIG. 19, the case 110 of the robot cleaner 100 may include an outer wall 111. A panel type outer wall 111 is fabricated and the outer wall 111 defines an exterior appearance of the case 110. Various components may be provided in the water wall 111.

In this embodiment, a lighting image 412 may be provided as the recognition means. The lighting image 412 may be selectively activated. In other words, the lighting image 412 may be generated or removed by selective activation of a light source 400.

Specifically, the outer wall 111 may include a color layer 111b and a reflective layer 111c. The color layer 111b is formed in an outer portion and the reflective layer 111c may be formed in an inner portion. The color layer 111b realizes an exterior design color sense of the case 110.

Basically, the outer light source may not transmit to the inner portion of the outer wall 111 via the reflective layer 111c and the user cannot see the inner space of the reflective layer 111c. Also, a transparent layer 111a may be provided on an outer portion of the color layer 111b and a smooth and glossy exterior design can be realized.

To selectively generate or activate the lighting image 412, a lighting apparatus 400 may be provided in the reflective layer 111c. For example, the lighting apparatus 400 may include an LED lighting apparatus and a LED element. A light may be irradiated outside the case 111 from inside by the activation of the LED lighting apparatus or LED elements. Such a light may form a preset lighting image 111a in the outer wall 111 by transmitting the reflective layer 111c.

As shown in FIG. 19, in case of inactivating the lighting apparatus 400, the lighting image 412 is not generated in the outer wall 111 and the lighting apparatus 400 is not seen outside. Accordingly, an original design of the product is not damaged in case the lighting apparatus 400 is inactivated.

In contrast, in case the lighting apparatus 400 is activated, the lighting image 412 is generated in the outer wall 111 and the remote control device 200 maps a virtual region to an actual region via the lighting image 412.

When using the lighting image 412 as the recognition means, the design can be maintained and also the recognition means can be recognized clearly even in a dark environment.

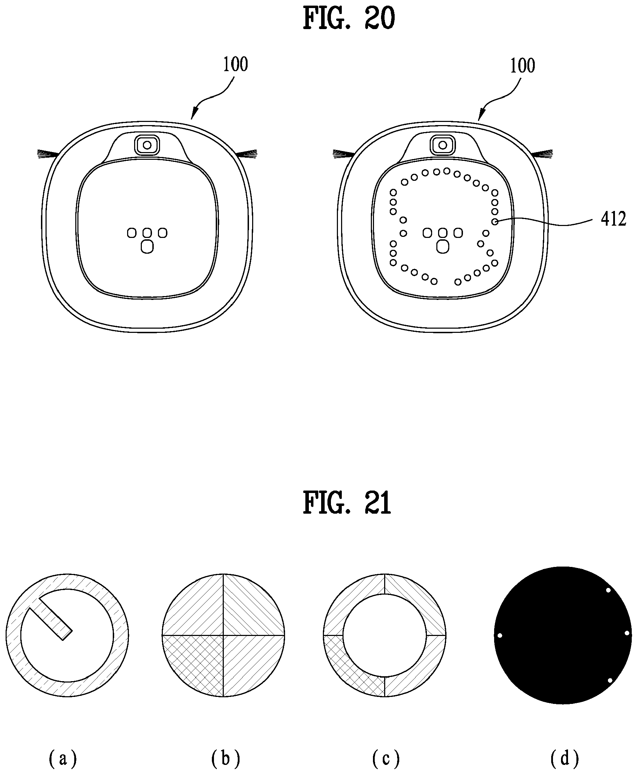

FIG. 20 is a diagram illustrating comparison between before and after activating the lightening image shown in FIG. 19. Before the lighting image is activated, a general exterior design of the robot cleaner may be maintained as it is. However, when the lighting image 412 is activated, the lighting image 412 is generated from an outer portion of the case 110 and the user can recognize the generated lighting image 412 outside easily.

Such lighting images may be arranged to have various shapes for LED elements, respectively. The lighting apparatus having a plurality of LED elements may form a lighting image in a predetermined region. For example, the LED lighting apparatus may form a circular or polygonal shaped lighting image.

The lighting image is formed by the light and recognized even in the dark environment easily. Even in a dark room, the robot cleaner can be used easily even with no lighting.

The lighting image 417 may not be always activated and it is preferred that the lighting image 412 is activated if necessary.

When the user performs remote-control for the robot cleaner 100 or using the location based service, using the remote control device 200 as shown in FIG. 14, the lighting image 412 may be activated. In other words, the lighting image 412 may be activated in an initialization step for such the control (S10). Following steps may be performed after the initialization step (S10).

For example, the service including the remote control may be performed by an application installed in the remote control device 200. Once the user implements the application on the remote control device 200, the remote control device 200 may transmit an implementing command to the robot cleaner 100. The robot cleaner 100 applies the electric power to the lighting apparatus 400 based on the implementing command, to activate the lighting image 412.

In other words, the lighting image 412 may be activated by the remote control device 100 in the initialization step (S10). After that, the activation of the lighting image 412 may be maintained consistently while the location based service is performed in accordance with the application. Once the application is ended, the activation of the lighting image 412 may be ended.

As mentioned above, the lighting image 412 may be activated only when the remote control device 200 is used. Other people as well as the user watching the robot cleaner 100 can intuitively figure out that the remote control device 200 is used. The lighting image 412 may realize a unique design and a new design, and also it may provide a pleasant function as well as an original function of the cleaner.

Meanwhile, the recognition means may be formed in various types and the location of the recognition means may be changeable variously. In addition, the shape and number of the recognition means may be changeable variously.

The recognition means may be used in mapping the actual region to the virtual region precisely. It is preferred that a mapping error is reduced by the recognition mean. An error caused in a small region mapped to a large region may be much larger.

For precise and minute mapping, the recognition means may be provided in a plurality of regions, for example, three or more. In this instance, the recognition means having various shapes may be provided.

Generally, a circular image is likely to have the least distortion in various angles. That is because a center of a circle can be figured out easily. The plurality of the recognition means may include a circular image or mark.

A light through a window or lighting may be reflected on the outer surface of the case 110 by a light source (e.g., external lighting and sunlight). However, the upper surface of the case 110 may be a gently curved surface and such reflection may be partially generated in the upper surface of the case 110. The reflection may distort the recognition means.

To deal with such a disadvantage flexibly, the plurality of the recognition means may be provided as mentioned above. Different from what is shown in FIG. 1, the recognition means may be provided in left upper and lower portions of the upper surface possessed by the case and right upper and lower portions of the upper surface. Accordingly, it may be prevented that an error is getting larger once the recognition means is distorted by the external light source.

FIG. 21 illustrates various types of the recognition means. The recognition means shown in FIG. 21 may be a mark or a light image. The recognition means may have various colors, especially, vivid primary colors. For example, the recognition means may be a visual mark shown in FIG. 21a, 21b and 21b or RI mark shown in FIG. 21d. The recognition means may figure out a linear portion reflected on the plane and it is necessary to provide two connected points making the linear portion seen clear in the recognition means.

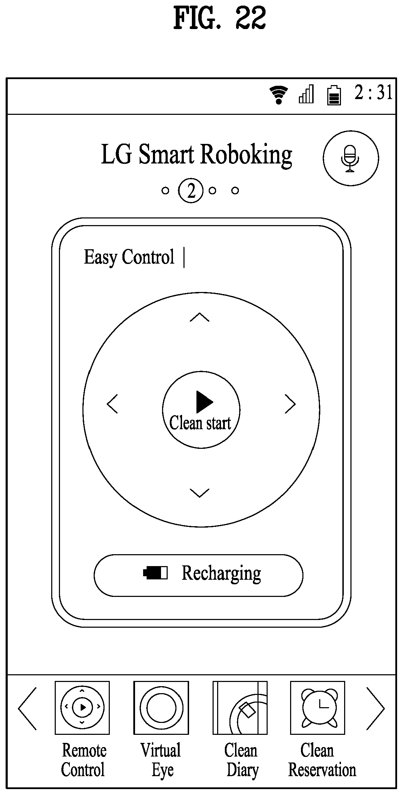

FIG. 22 is a diagram illustrating an example of a screen displayed on the remote control device 200, which can be called as an initial screen of an implemented application. The user can select various contents on the application initializing screen.

For example, an icon indicating remote control may be displayed on the initialization screen and the location based service mentioned above may be implemented by the remote control icon.

According to the robot cleaner system and the control method of the robot cleaner system mentioned above have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A remote control device (200) configured to perform remote-control of a robot cleaner (100), wherein the remote control device is arranged to generate mapping information between an actual region and a virtual region based on image information of a region, the image information being generated by a camera (221) located on the remote control device,
   wherein an application is installed in the remote control device to perform the remote control of the robot cleaner, and wherein the remote control device is configured to transmit an implementing command for activating a lighting apparatus (400) of the robot cleaner to generate a lighting image (412) provided as recognition means (112, 312, 412) recognizable by the camera when the application is implemented.

2. The remote control device (200) of claim 1 wherein the region is a region near the robot cleaner (100).

3. The remote control device (200) according to claim 1 or 2, wherein the remote control device is arranged to generate location information and posture information of a robot cleaner (100) by sensing the robot cleaner based on the image information.

4. The remote control device (200) according to claim 1, 2 or 3, wherein the remote control device is arranged to generate the mapping information by comparing actual shape information of recognition means (112, 312, 412) on a robot cleaner (100) with relative shape information recognized by the image information.

5. The remote control device (200) according to any preceding claim, wherein the remote control device comprises,
   a display (241) configured to display the image information; and
   an input unit (220, 230) configured to receive input.

6. The remote control device (200) according to claim 5, wherein the display (241) comprises a touch sensor functioned as the input unit (230) configured to sense touch input.

7. The remote control device (200) according to claim 6 further comprising a wireless communications unit (210) arranged to transmit a control signal in response to the touch input.

8. The remote control device (200) according to claim 7, wherein the control signal comprising a driving command signal for a robot cleaner (100).

9. The remote control device (200) according to claim 8 wherein the driving command signal comprises a command for the robot cleaner (100) to perform a location based service.

10. The remote control device (200) according to claim 9 wherein the location-based service comprises setting a cleaning region of the robot cleaner (100) via the touch input by designating a virtual region 'A' on the screen of the display, and wherein the remote control device is configured to map the virtual region with an actual region and transmit an actual motion coordinate to the robot cleaner.

11. The remote control device (200) according to claim 9 or 10 wherein the location-based service comprises setting a passage of the robot cleaner (100) via the touch input of an image of the room output on the display (241).

12. The remote control device (200) according to claim 9, 10 or 11 wherein the location-based service comprises setting a do-not-clean region via the touch input by designating a no-cleaning line, 'C', on the screen of the display (241) to set an outer region with respect to partitioning lines on the room corresponding to the no-cleaning line, 'C', as the do-not-clean region.

13. The remote control device (200) according to claim 9, 10, 11 or 12 wherein the location-based service comprises, in response to a user inputting a voice input to a microphone (222) of the remote control device, the robot cleaner (100) moving to the location of the remote control device.

14. The remote control device (200) according to any preceding claim wherein the wireless communications unit (210) includes:

a mobile communication module (211) arranged to transmit and receive a wireless signal to and from one or more of a base station, an external terminal, a server on a mobile communication network, wherein the wireless signal includes at least one selected from the group comprising a voice call signal, a video call signal or a texture/multimedia message;
a wireless internet module (212) arranged for wireless internet link including at least one selected from the group comprising WLAN, WiBro, WiMax and HSDPA; and
a short range communication module (213) arranged for short range communication including at least one selected from the group comprising Bluetooth, RFID, IrDA and UW

15. The remote control device (200) according to any preceding claim further comprising a memory (250) for storing information on a recognition mark (112) on a robot cleaner (100).

16. The remote control device (200) according to claim 15 further comprising a terminal controller (270) configured to extract a recognition mark (112) from an image of the image information and determine whether the extracted recognition mark is available such that the robot cleaner (100) can be sensed based on the result of the determination.

17. The remote control device (200) according to claim 16 wherein the terminal controller (270) is arranged to check a shape, pattern or a specific color of the recognition mark (112) to extract the recognition mark from the image of the image information.

18. The remote control device (200) according to claim 16 or 17 wherein the terminal controller (270) is arranged to improve the image quality of the image information before extracting the recognition mark (112) from the image of the image information.

19. The remote control device (200) according to claim 16, 17 or 18 wherein the terminal controller (270) is configured to perform image brightness control, noise rejection and color correction to improve the image quality of the image information.

20. The remote control device (200) according to any of claims 15 to 19 configured to compare the actual shape of the recognition mark (112) with the relative shape extracted from the image information and determine the location and posture of the robot cleaner (100) based on the result of the comparison.

21. The remote control device (200) according to claim 20 configured to determine a distance between the user and the robot cleaner (100) and a photographing angle, and/or the scale between the virtual region displayed on the image information and the actual region, based on the result of the comparison.

**Patentansprüche**

1. Fernsteuervorrichtung (200), die konfiguriert ist, eine Fernsteuerung eines Roboterreinigers (100) auszuführen, wobei die Fernsteuervorrichtung dafür ausgelegt ist, Abbildungsinformationen zwischen einem tatsächlichen Bereich und einem virtuellen Bereich auf der Grundlage von Bildinformationen über einen Bereich zu erzeugen, wobei die Bildinformationen durch eine Kamera (221), die sich an der Fernsteuervorrichtung befindet, erzeugt werden, wobei in der Fernsteuervorrichtung eine Anwendung installiert ist, um die Fernsteuerung des Roboterreinigers auszuführen, und wobei die Fernsteuervorrichtung konfiguriert ist, einen Implementierungsbefehl zum Aktivieren einer Beleuchtungsvorrichtung (400) des Roboterreinigers zu senden, um ein Beleuchtungsbild (412) zu erzeugen, das als ein Erkennungsmittel (112, 312, 412), das durch die Kamera erkennbar ist, wenn die Anwendung implementiert ist, bereitgestellt wird.

2. Fernsteuervorrichtung (200) nach Anspruch 1, wobei der Bereich ein Bereich in der Nähe des Roboterreinigers (100) ist.

3. Fernsteuervorrichtung (200) nach Anspruch 1 oder 2, wobei die Fernsteuervorrichtung dafür ausgelegt ist, Ortsinformationen und Lageinformationen eines Roboterreinigers (100) durch Erfassen des Roboterreinigers auf der Grundlage der Bildinformationen zu erzeugen.

4. Fernsteuervorrichtung (200) nach Anspruch 1, 2 oder 3, wobei die Fernsteuervorrichtung dafür ausgelegt ist, die Abbildungsinformationen durch Vergleichen von Informationen über die tatsächliche Form der Erkennungsmittel (112, 312, 412) an einem Roboterreiniger (100) mit Informationen über die relative Form, die durch die Bildinformationen erkannt wird, zu erzeugen.

5. Fernsteuervorrichtung (200) nach einem vorhergehenden Anspruch, wobei die Fernsteuervorrichtung Folgendes umfasst:

   eine Anzeige (241), die konfiguriert ist, die Bildinformationen anzuzeigen; und
   eine Eingabeeinheit (220, 230), die konfiguriert ist, eine Eingabe zu empfangen.

6. Fernsteuervorrichtung (200) nach Anspruch 5, wobei die Anzeige (241) einen Berührungssensor enthält, der als die Eingabeeinheit (230) dient und konfiguriert ist, eine Berührungseingabe zu erfassen.

7. Fernsteuervorrichtung (200) nach Anspruch 6, die ferner eine drahtlose Kommunikationseinheit (210) enthält, die dafür ausgelegt ist, in Reaktion auf die Berührungseingabe ein Steuersignal zu senden.

8. Fernsteuervorrichtung (200) nach Anspruch 7, wobei das Steuersignal ein Antriebsbefehlssignal für einen Roboterreiniger (100) enthält.

9. Fernsteuervorrichtung (200) nach Anspruch 8, wobei das Antriebsbefehlssignal einen Befehl, um für den Roboterreiniger (100) einen ortsbasierten Dienst auszuführen, enthält.

10. Fernsteuervorrichtung (200) nach Anspruch 9, wobei der ortsbasierte Dienst das Festlegen eines Reinigungsbereichs des Roboterreinigers (100) über die Berührungseingabe durch Angeben eines virtuellen Bereichs 'A' auf dem Bildschirm der Anzeige umfasst und wobei die Fernsteuervorrichtung konfiguriert ist, den virtuellen Bereich auf einen tatsächlichen Bereich abzubilden und eine Koordinate für die tatsächliche Bewegung zu dem Roboterreiniger zu senden.

11. Fernsteuervorrichtung (200) nach Anspruch 9 oder 10, wobei der ortsbasierte Dienst das Festlegen einer Bewegungsstrecke des Roboterreinigers (100) über die Eingabe durch Berührung eines Bildes des Raums, das auf der Anzeige (241) ausgegeben wird, umfasst.

12. Fernsteuervorrichtung (200) nach Anspruch 9, 10 oder 11, wobei der ortsbasierte Dienst das Festlegen eines nicht zu reinigenden Bereichs über die Berührungseingabe durch Angeben einer Nichtreinigungslinie 'C' auf dem Bildschirm der Anzeige (241), um einen äußeren Bereich in Bezug auf Trennlinien des Raums, die der Nichtreinigungslinie 'C' entsprechen, als den nicht zu reinigenden Bereich festzulegen, umfasst.

13. Fernsteuervorrichtung (200) nach Anspruch 9, 10, 11 oder 12, wobei der ortsbasierte Dienst umfasst, in Reaktion auf die Eingabe einer Spracheingabe eines Anwenders in ein Mikrofon (222) der Fernsteuervorrichtung den Roboterreiniger (100) zu dem Ort der Fernsteuervorrichtung zu bewegen.

14. Fernsteuervorrichtung (200) nach einem vorhergehenden Anspruch, wobei die drahtlose Kommunikationseinheit (210) Folgendes umfasst:

   ein Mobilkommunikationsmodul (211), das dafür ausgelegt ist, ein drahtloses Signal zu einer Basisstation und/oder einem äußeren Endgerät und/oder einem Server in einem Mobilkommunikationsnetz zu senden oder hiervon zu empfangen, wobei das drahtlose Signal wenigstens ein Signal aus der Gruppe enthält, die ein Sprachanrufsignal, ein Videoanrufsignal oder eine Text-/Multimedia-Nachricht umfasst;
   ein drahtloses Internetmodul (212), das für die Herstellung einer drahtlosen Internetverbindung ausgelegt ist, die wenigstens eine aus der Gruppe enthält, die WLAN, WiBro, WiMax und HSDPA umfasst; und
   ein Modul (213) für kurzreichweitige Kommunikation, das für eine kurzreichweitige Kommunikation ausgelegt ist, die wenigstens eine aus der Gruppe enthält, die Bluetooth, RFID, IrDA und UW umfasst.

15. Fernsteuervorrichtung (200) nach einem vorhergehenden Anspruch, die ferner einen Speicher (250) umfasst, um Informationen über eine Erkennungsmarkierung (112) an einem Roboterreiniger (100) zu speichern.

16. Fernsteuervorrichtung (200) nach Anspruch 15, die ferner eine Endgerät-Steuereinheit (270) umfasst, die konfiguriert ist, eine Erkennungsmarkierung (112) aus einem Bild der Bildinformationen zu extrahieren und zu bestimmen, ob die extrahierte Erkennungsmarkierung verfügbar ist, so dass der Roboterreiniger (100) auf der Grundlage des Ergebnisses der Bestimmung erfasst werden kann.

17. Fernsteuervorrichtung (200) nach Anspruch 16, wobei die Endgerät-Steuereinheit (270) dafür ausgelegt ist, eine Form, ein Muster oder eine bestimmte Farbe der Erkennungsmarkierung (112) zu prüfen, um die Erkennungsmarkierung aus dem Bild der Bildinformationen zu extrahieren.

18. Fernsteuervorrichtung (200) nach Anspruch 16 oder 17, wobei die Endgerät-Steuereinheit (270) dafür ausgelegt ist, die Bildqualität der Bildinformationen zu verbessern, bevor die Erkennungsmarkierung (112) aus dem Bild der Bildinformationen extrahiert wird.

19. Fernsteuervorrichtung (200) nach Anspruch 16, 17 oder 18, wobei die Endgerät-Steuereinheit (270) konfiguriert ist, eine Bildhelligkeitssteuerung, eine Rauschunterdrückung und eine Farbkorrektur auszuführen, um die Bildqualität der Bildinformationen zu verbessern.

20. Fernsteuervorrichtung (200) nach einem der Ansprüche 15 bis 19, die konfiguriert ist, die tatsächliche Form der Erkennungsmarkierung (112) mit der relativen Form, die aus den Bildinformationen extrahiert wird, zu vergleichen und den Ort und die Lage des Roboterreinigers (100) auf der Grundlage des Vergleichsergebnisses zu bestimmen.

21. Fernsteuervorrichtung (200) nach Anspruch 20, die konfiguriert ist, einen Abstand zwischen dem Anwender und dem Roboterreiniger (100) und einen Photographierwinkel und/oder den Maßstab zwischen dem auf den Bildinformationen angezeigten virtuellen Bereich und dem tatsächlichen Bereich auf der Grundlage des Vergleichsergebnisses zu bestimmen.


**Revendications**

1. Dispositif de commande à distance (200) conçu pour effectuer la commande à distance d'un robot nettoyeur (100), le dispositif de commande à distance étant agencé pour générer des informations de correspondance entre une région réelle et une région virtuelle sur la base d'informations d'image d'une région, les informations d'image étant générées par une caméra (221) située sur le dispositif de commande à distance, une application étant installée dans le dispositif de commande à distance pour effectuer la commande à distance du robot nettoyeur, et le dispositif de commande à distance étant conçu pour transmettre une commande d'implémentation destinée à activer un appareil d'éclairage (400) du robot nettoyeur pour générer une image d'éclairage (412) fournie comme moyen de reconnaissance (112, 312, 412) reconnaissable par la caméra lorsque l'application est implémentée.

2. Dispositif de commande à distance (200) selon la revendication 1, la région étant une région proche du robot nettoyeur (100).

3. Dispositif de commande à distance (200) selon la revendication 1 ou 2, le dispositif de commande à distance étant agencé pour générer des informations d'emplacement et des informations de posture d'un robot nettoyeur (100) en détectant le robot nettoyeur sur la base des informations d'image.

4. Dispositif de commande à distance (200) selon la revendication 1, 2 ou 3, le dispositif de commande à distance étant agencé pour générer les informations de correspondance en comparant des informations de forme réelles des moyens de reconnaissance (112, 312, 412) sur un robot nettoyeur (100) avec des informations de forme relative reconnues par les informations d'image.

5. Dispositif de commande à distance (200) selon l'une quelconque des revendications précédentes, le dispositif de commande à distance comprenant

un affichage (241) conçu pour afficher les informations d'image ; et
une unité d'entrée (220, 230) conçue pour recevoir une entrée.

6. Dispositif de commande à distance (200) selon la revendication 5, l'affichage (241) comprenant un capteur tactile fonctionnant comme l'unité d'entrée (230) conçue pour détecter une entrée tactile.

7. Dispositif de commande à distance (200) selon la revendication 6, comprenant en outre une unité de communication sans fil (210) agencée pour transmettre un signal de commande en réponse à l'entrée tactile.

8. Dispositif de commande à distance (200) selon la revendication 7, le signal de commande comprenant un signal de commande d'entraînement d'un robot nettoyeur (100) .

9. Dispositif de commande à distance (200) selon la revendication 8, le signal de commande d'entraînement comprenant une commande pour que le robot nettoyeur (100) effectue un service basé sur l'emplacement.

10. Dispositif de commande à distance (200) selon la revendication 9, le service basé sur l'emplacement comprenant le réglage d'une région de nettoyage du robot nettoyeur (100) par le biais de l'entrée tactile par désignation d'une région virtuelle « A » sur l'écran de l'affichage, et le dispositif de commande à distance étant conçu pour établir une correspondance entre la région virtuelle et une région réelle et transmettre une coordonnée de mouvement réelle au robot nettoyeur.

11. Dispositif de commande à distance (200) selon la revendication 9 ou 10, le service basé sur l'emplacement comprenant la définition d'un passage du robot nettoyeur (100) par le biais de l'entrée tactile d'une image de la sortie de pièce sur l'affichage (241) .

12. Dispositif de commande à distance (200) selon la revendication 9, 10 ou 11, le service basé sur l'emplacement comprenant la définition d'une région à ne pas nettoyer par le biais de l'entrée tactile par désignation d'une ligne sans nettoyage « C » sur l'écran de l'affichage (241) pour définir une région extérieure par rapport à des lignes de séparation sur la pièce correspondant à la ligne sans nettoyage « C » en tant que région à ne pas nettoyer.

13. Dispositif de commande à distance (200) selon la revendication 9, 10, 11 ou 12, le service basé sur l'emplacement comprenant, en réponse au fait qu'un utilisateur entre une entrée vocale dans un microphone (222) du dispositif de commande à distance, le déplacement du robot nettoyeur (100) vers l'emplacement du dispositif de commande à distance.

14. Dispositif de commande à distance (200) selon l'une quelconque des revendications précédentes, l'unité de communication sans fil (210) comprenant :

    un module de communication mobile (211) agencé pour transmettre et recevoir un signal sans fil vers et depuis au moins une station de base, un terminal extérieur, un serveur sur un réseau de communication mobile, le signal sans fil comprenant au moins un élément sélectionné dans le groupe comprenant un signal d'appel vocal, un signal d'appel vidéo et un message texture/multimédia ;
    un module Internet sans fil (212) agencé pour une liaison Internet sans fil comprenant au moins un élément sélectionné dans le groupe comprenant WLAN, WiBro, WiMax et HSDPA ; et
    un module de communication à courte portée (213) agencé pour une communication à courte portée comprenant au moins un élément sélectionné dans le groupe comprenant Bluetooth, RFID, IrDA et UW.

15. Dispositif de commande à distance (200) selon l'une quelconque des revendications précédentes, comprenant en outre une mémoire (250) destinée à mémoriser des informations sur une marque de reconnaissance (112) sur un robot nettoyeur (100).

16. Dispositif de commande à distance (200) selon la revendication 15, comprenant en outre un contrôleur de terminal (270) conçu pour extraire une marque de reconnaissance (112) d'une image des informations d'image et déterminer si la marque de reconnaissance extraite est disponible de telle sorte que le robot nettoyeur (100) puisse être détecté sur la base du résultat de la détermination.

17. Dispositif de commande à distance (200) selon la revendication 16, le contrôleur de terminal (270) étant agencé pour vérifier une forme, un motif ou une couleur spécifique de la marque de reconnaissance (112) pour extraire la marque de reconnaissance de l'image des informations d'image.

18. Dispositif de commande à distance (200) selon la revendication 16 ou 17, le contrôleur de terminal (270) étant agencé pour améliorer la qualité d'image des informations d'image avant d'extraire la marque de reconnaissance (112) de l'image des informations d'image.

19. Dispositif de commande à distance (200) selon la revendication 16, 17 ou 18, le contrôleur de terminal (270) étant conçu pour effectuer une commande de luminosité d'image, une réjection de bruit et une correction de couleur pour améliorer la qualité d'image des informations d'image.

20. Dispositif de commande à distance (200) selon l'une quelconque des revendications 15 à 19, conçu pour comparer la forme réelle de la marque de reconnaissance (112) avec la forme relative extraite des informations d'image et déterminer l'emplacement et la posture du robot nettoyeur (100) sur la base du résultat de la comparaison.

21. Dispositif de commande à distance (200) selon la revendication 20 conçu pour déterminer une distance entre l'utilisateur et le robot nettoyeur (100) et un angle de photographie, et/ou l'échelle entre la région virtuelle affichée sur les informations d'image et la région réelle, sur la base du résultat de la comparaison.

# FIG. 1

# FIG. 2

# FIG. 3

# FIG. 4

100

| Battery | ~170 |

120 ~ | Suction device |

| Wheels | ~150 |
| Left wheel motor | ~152a |
| Right wheel motor | ~154a |

180 ~ | Wireless communication unit |
181 ~ | Wireless internet module |
182 ~ | Short range communication module |

| Controller |

~160

# FIG. 5

200

| | | |
|---|---|---|
| | Power supply —280 | 240 |

210

Wireless communication unit

| | |
|---|---|
| 211 | Mobile communication module |
| 212 | Wireless Internet module |
| 213 | Short range communication module |
| 214 | Location information module |

Controller —270

Multimedia module —271

| 220 | A / V input unit |
|---|---|
| 221 | Camera |
| 222 | Microphone |

| 230 | User input unit |
|---|---|

Output unit

| | |
|---|---|
| Display | —241 |
| Audio output module | —242 |
| Alarm module | —243 |
| Haptic module | —244 |

Memory —250

Interface unit —260

# FIG. 6

200

221
242
201
202
260
241
231
232
222

# FIG. 7

200
242'
221' 223
224
202
201
280
222

# FIG. 8

# FIG. 9A

# FIG. 9B

# FIG. 9C

# FIG. 9D

# FIG. 10A

# FIG. 10B

# FIG. 11

241

200

100

B

B'

# FIG. 12

241

200

100

C

C'

# FIG. 13

# FIG. 14

| | |
|---|---|
| Initializing | — S10 |
| ↓ | |
| Robot cleaner image information generating | — S100 |
| ↓ | |
| Robot cleaner sensing | — S200 |
| ↓ | |
| Robot cleaner location information generating | — S300 |
| ↓ | |
| Image information & location information outputting | — S400 |
| ↓ | |
| Location based service providing | — S500 |

# FIG. 15

S100 , S200

| | |
|---|---|
| Robot cleaner image information generating | — S100 |
| ↓ | |
| Image improving | — S210 |
| ↓ | |
| Recognition microphone sensing | — S220 |
| ↓ | S230 |
| Effective recognition mark? | — S200 |
| No / Yes | |
| Robot cleaner recognizing | — S240 |

# FIG. 16

S500

Touch input applying —— S510

↓

Signal transmitting to Robot cleaner —— S520

↓

Robot cleaner driving —— S530

# FIG. 17

S100 , S200

Robot cleaner image information generating —— S100

↓

Image improving —— S210'

↓

Robot cleaner shape sensing —— S220'

↓

S230'

No ← Effective shape? —— S200

↓ Yes

Robot cleaner recognizing —— S240'

37

## FIG. 18

<u>200</u>

## FIG. 19

# FIG. 20

100

100

412

# FIG. 21

(a)     (b)     (c)     (d)

# FIG. 22

LG Smart Roboking

Easy Control |

Clean start

Recharging

Remote Control | Virtual Eye | Clean Diary | Clean Reservation

2:31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120119843
- KR 1020130106870
- US 20080082208 A1
- US 20120121127 A1